(19) **Europäisches Patentamt / European Patent Office / Office européen des brevets**

(11) **EP 4 712 157 A1**

(12) **EUROPEAN PATENT APPLICATION**
published in accordance with Art. 153(4) EPC

(43) Date of publication:
**18.03.2026   Bulletin 2026/12**

(21) Application number: **24882787.5**

(22) Date of filing: **23.10.2024**

(51) International Patent Classification (IPC):
**H01M 4/133** (2010.01)   **H01M 4/1393** (2010.01)
**H01M 4/583** (2010.01)   **H01M 4/62** (2006.01)
**H01M 10/052** (2010.01)   **H01M 4/587** (2010.01)
**H01M 4/02** (2006.01)

(52) Cooperative Patent Classification (CPC):
**H01M 4/02; H01M 4/133; H01M 4/1393;
H01M 4/583; H01M 4/587; H01M 4/62;
H01M 10/052;** Y02E 60/10

(86) International application number:
**PCT/KR2024/016114**

(87) International publication number:
**WO 2025/089760 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.10.2023   KR 20230142600
24.10.2023   KR 20230142612
24.10.2023   KR 20230142616
22.10.2024   KR 20240144799**

(71) Applicant: **LG Energy Solution, Ltd.
Seoul 07335 (KR)**

(72) Inventors:
• **LIM, Ga Hyun**
  **Daejeon 34122 (KR)**
• **PARK, Sung Min**
  **Daejeon 34122 (KR)**
• **LEE, Yong Ju**
  **Daejeon 34122 (KR)**
• **WOO, Sang Wook**
  **Daejeon 34122 (KR)**

(74) Representative: **Plasseraud IP
104 Rue de Richelieu
CS92104
75080 Paris Cedex 02 (FR)**

(54) **ANODE AND MANUFACTURING METHOD THEREFOR**

(57)    A negative electrode may include a first negative electrode active layer and a second negative electrode active layer on a negative electrode current collector. An orientation index (O.I.) of each of the negative electrode active layers may satisfy a predetermined range, and thus adhesion of the negative electrode active layers to the negative electrode current collector is highly implemented, thereby having excellent lifespan characteristics. In addition, a secondary battery including the same has excellent output characteristics and can be charged in a short time even at a 1C-rate.

**Description**

[Technical Field]

The present disclosure relates to a negative electrode and a manufacturing method of the same.
This application claims the benefit of priority from Korean Patent Application No. 10-2023-0142600, No. 10-2023-0142612, and No. 10-2023-0142616, filed on October 24, 2023, and No. 10-2024-0144799, filed on October 22, 2024, and all of the contents of the Korean Patent Application No. 10-2023-0142600, No. 10-2023-0142612, No. 10-2023-0142616, and No. 10-2024-0144799 are incorporated by reference into this disclosure.

[Background]

Recently, lithium secondary batteries are widely applied not only to small devices such as portable electronic devices but also to medium and large-sized devices such as battery packs for hybrid vehicles or electric vehicles and power storage devices. In particular, recently, as environmental concerns have grown, there has been extensive research on electric vehicles and hybrid electric vehicles that can replace vehicles using fossil fuels such as gasoline and diesel vehicles, which are major causes of air pollution.
Conventional lithium secondary batteries can only be applied to short-range electric vehicles due to limitations in energy density. Accordingly, technology has been intensively developed to increase the energy density of lithium secondary batteries.
However, the developed automotive lithium secondary batteries have a problem in that it takes a long time to charge after discharging due to vehicle operation. Therefore, as the penetration rate of electric vehicles increases, there is an increasing demand to reduce charging time to a level acceptable to users.
Meanwhile, a lithium secondary battery is a power generation element capable of charging and discharging, having a stacked structure of positive electrode/separator/negative electrode. During charging of the lithium secondary battery, a lithium deintercalation reaction occurs at the positive electrode where lithium contained in the positive electrode active material is oxidized and released, and a lithium insertion reaction occurs at the negative electrode where lithium is reduced and enters into the negative electrode active material. Generally, since the deintercalation reaction in the positive electrode active material is faster than the insertion reaction in the negative electrode active material, the rapid charging and discharging performance of the lithium secondary battery is mainly determined by the negative electrode.
Materials containing graphite are widely used as the negative electrode active material for the negative electrode. The average potential when graphite-containing materials release lithium is about 0.2V (based on Li/Li+), and the discharge potential shows a relatively flat pattern. For this reason, when graphite is used as the negative electrode active material, the secondary battery has the advantage of having a high and constant voltage.
Amorphous carbon or crystalline carbon is used as the negative electrode active material used in the negative electrode, among which crystalline carbon is mainly used due to its high capacity. Such crystalline carbon includes graphite-based carbon such as natural graphite and artificial graphite.
The graphite-based carbon differs in its characteristics depending on its type. For example, natural graphite is inexpensive and exhibits excellent adhesion to the current collector, but is relatively inferior in terms of high-rate charge and discharge performance and lifespan characteristics compared to artificial graphite. However, since artificial graphite has fewer surface defects and functional groups, it has weak adhesion to the current collector, and when propylene carbonate (PC) is mixed in the electrolyte for the purpose of improving low-temperature performance, the propylene carbonate causes exfoliation of each layer forming the interlayer structure of graphite, resulting in destruction.
Accordingly, there have been attempts to apply mixed graphite as a negative electrode active material for lithium secondary batteries to take advantage of each advantage by appropriately combining natural graphite and artificial graphite. However, such mixed graphite has limitations in that it is difficult to reach a satisfactory level in terms of lifespan characteristics and impact resistance stability due to decreased adhesion to the current collector.
Therefore, to fundamentally solve these problems, there is a high need for negative electrode technology that has excellent lifespan characteristics due to high adhesion to the current collector, excellent output characteristics, and high rapid charging characteristics.

[Related Art Document]

[Patent Document]

Korean Patent Application Publication No. 10-2022-0064389

[Summary]

[Technical Problem]

An object of the present disclosure is to provide a negative electrode having excellent lifespan characteristics, excellent output characteristics, and high rapid charging characteristics due to high adhesion to a current collector and the like, and a manufacturing method of the same.

[Technical Solution]

To solve the problem described above,

the present disclosure provides a negative electrode comprising
a negative electrode current collector,
a first negative electrode active layer disposed on the negative electrode current collector, and including a first carbon-based negative electrode active material; and
a second negative electrode active layer disposed on the first negative electrode active material layer, and including a second carbon-based negative electrode active material;
wherein the second negative electrode active layer has an orientation index $(O.I_{2nd})$ of 6 or less, as represented by formula 1 below;
wherein the orientation index $(O.I_{1st})$ of the first negative electrode active layer a ratio of 200% to 900% based on the orientation index $(O.I_{2nd})$ of the second negative electrode active layer:

$$[\text{Formula 1}] \ O.I = I_{004}/I_{110}$$

wherein $I_{004}$ indicates the peak area value representing the (004) crystal surface in X-ray diffraction spectroscopy (XRD) analysis of the negative electrode active layer,
wherein $I_{110}$ indicates the peak area value representing the (110) crystal surface in X-ray diffraction spectroscopy (XRD) analysis of the negative electrode active layer.

In this case, the ratio $(D_2/D_1)$ of the average particle diameter $(D_2)$ of the second carbon-based negative electrode active material to the average particle diameter $(D_1)$ of the first carbon-based negative electrode active material may have a range of 2.0 or more.

The first carbon-based negative electrode active material and the second carbon-based negative electrode active material may each include one or more types of natural graphite or artificial graphite.

The average particle diameter $(D_1)$ of the first carbon-based negative electrode active material may have a range of less than 5 $\mu$m, and the average particle diameter $(D_2)$ of the second carbon-based negative electrode active material may have a range of 10 $\mu$m to 25 $\mu$m.

The first negative electrode active layer may comprise a carbon structure having an average size in a range of 5 nm to 900 nm.

The carbon structure may include one or more types of a dot-type carbon structure, a fiber-type carbon structure, or a plane-type carbon structure.

The content of the carbon structure may be in a range of 0.001 wt.% to 10 wt.% based on the total weight of the first negative electrode active layer.

The first negative electrode active layer and the second negative electrode active layer may comprise a first thickening agent and a second thickening agent, respectively, wherein the content of the first thickening agent may have a ratio of 80% to 120% based on the content of the second thickening agent.

The first thickening agent and the second thickening agent may each include one or more types of carboxymethylcellulose (CMC), polyvinyl alcohol (PVA), polyvinyl butyral (PVB), polyN-vinylacetamide (PNVA), styrene-butadiene rubber (SBR), acrylic-based resin, or fluorine-based resin.

The first thickening agent may be included in an amount of 0.5 wt.% to 3 wt.% based on the total weight of the first negative electrode active layer.

The present disclosure further provides a manufacturing method of a negative electrode which comprises steps of,

coating at least one side of a negative electrode current collector with a first negative electrode slurry comprising a first carbon-based negative electrode active material,
coating a second negative electrode slurry comprising a second carbon-based negative electrode active material on the coated first negative electrode slurry,

applying magnetic field to the negative electrode current collector to which the second negative electrode slurry is applied; and

drying the first negative electrode slurry and the second negative electrode slurry to which the magnetic field is applied to form a first negative electrode active layer and a second negative electrode active layer;

wherein the second negative electrode active layer has an orientation index ($O.I_{2nd}$) of 6 or less, as represented by formula 1 below;

wherein the orientation index ($O.I_{1st}$) of the first negative electrode active layer has a ratio of 200% to 900% based on the orientation index ($O.I_{2nd}$) of the second negative electrode active layer:

$$[\text{Formula 1}]\ O.I = I_{004}/I_{110}$$

wherein $I_{004}$ indicates the peak area value representing the (004) crystal surface in X-ray diffraction spectroscopy (XRD) analysis of the negative electrode active layer,

wherein $I_{110}$ indicates the peak area value representing the (110) crystal surface in X-ray diffraction spectroscopy (XRD) analysis of the negative electrode active layer.

In this case, the step of coating the first negative electrode slurry and the step of coating the second negative electrode slurry may be performed simultaneously.

The magnetic field may be applied with an intensity of 3,000 G to 10,000 G.

The magnetic field may be applied for a period of 1 second to 60 seconds.

The first negative electrode slurry may have a solid content in a range of 35% to 85%.

A room temperature viscosity of the first negative electrode slurry may be higher than a room temperature viscosity of the second negative electrode slurry.

The ratio ($D_2/D_1$) of the average particle diameter ($D_2$) of the second carbon-based negative electrode active material to the average particle diameter ($D_1$) of the first carbon-based negative electrode active material may have a range of 2.0 or more.

The first negative electrode slurry may include carbon structures having an average size in a range of 5 nm to 900 nm.

The content of the carbon structures may have a range of 0.001 wt.% to 10 wt.% based on the total weight of the solid content of the first negative electrode slurry.

The first negative electrode slurry and the second negative electrode slurry may be mixed with the first thickening agent and the second thickening agent in a solution state, respectively, during manufacturing, and each solution including the first thickening agent and the second thickening agent may have a different concentration.

The concentration of the solution comprising the second thickening agent may be in a range of 0.5 wt.% to 1.5 wt.% based on the total weight of the solution, and the concentration of the solution comprising the first thickening agent may have a concentration ratio of 150% to 250% based on the concentration of the solution comprising the second thickening agent.

[Advantageous Effects]

The negative electrode according to the present disclosure is characterized by high adhesion to the negative electrode current collector and thus has excellent lifespan characteristics. In addition, the secondary battery including the same has the advantage of having excellent output characteristics and can be charged in a short time even at a 1C-rate.

[Detailed Description]

The present disclosure may have various modifications and various aspects, and specific aspects will be described in detail in the following detailed description.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, "including as a major component" can mean including at least 50 wt.% (or at least 50 vol.%), at least 60 wt.% (or at least 60 vol.%), at least 70 wt.% (or at least 70 vol.%), at least 80 wt.% (or at least 80 vol.%), at least 90 wt.% (or at least 90 vol.%), or at least 95 wt.% (or at least 95 vol.%) of a defined component based on the total weight (or total volume) of the negative electrode active material. For example, "including graphite as a major component as a negative electrode active material" may mean including at least 50 wt.%, at least 60 wt.%, at least 70 wt.%, at least 80 wt.%, at least 90 wt.%, or at least 95 wt.% of graphite, based on the total weight of the negative electrode active material, and in some cases may mean that the total negative electrode active material is graphite, comprising 100 wt.% of graphite.

Furthermore, in this specification, 'carbon-based negative electrode active material is oriented' or 'carbon-based negative electrode active material is aligned' means that a specific crystal surface (e.g., the ab-axis crystal surface of graphite) representing the two-dimensional planar structure of the carbon-based negative electrode active material constituting the negative electrode active material particles is arranged to have a predetermined inclination with respect to the negative electrode current collector surface, which may be different from the carbon-based negative electrode active material particles themselves being arranged to have a specific orientation within the negative electrode active layer.

Also, 'high orientation of carbon-based negative electrode active material' may mean that the specific crystal surface (e.g., the ab-axis crystal surface of graphite) representing the two-dimensional planar structure of the carbon-based negative electrode active material contained in the negative electrode active layer has a high frequency of having a predetermined inclination with respect to the negative electrode current collector surface. In addition, in some cases, it may mean that the crystal surface of the carbon-based negative electrode active material contained in the negative electrode active layer is arranged at a high angle (e.g., an angle close to perpendicular, greater than 45°; specifically, 60° or more) with respect to the negative electrode current collector surface.

Also, 'high orientation index of carbon-based negative electrode active material' means that the 'orientation index (O.I)' referred to herein has a large value, which may mean that the specific crystal surface (e.g., the ab-axis crystal surface of graphite) representing the two-dimensional planar structure of the carbon-based negative electrode active material contained in the negative electrode active layer is arranged at a low angle (e.g., less than 45°) with respect to the negative electrode current collector surface. Conversely, 'low orientation index of carbon-based negative electrode active material' means that the 'orientation index (O.I)' has a small value, which may mean that the crystal surface of the carbon-based negative electrode active material contained in the negative electrode active layer is arranged at a high angle (e.g., an angle close to perpendicular, 45° or more; specifically, 60° or more) with respect to the negative electrode current collector surface.

Further, in this specification, 'crystal surface of carbon-based negative electrode active material' refers to a surface where atoms of the carbon-based negative electrode active material form the external shape of the crystal, which in this disclosure may mean a crystal surface including the plane of the carbon-based negative electrode active material, or a crystal surface including the a-axis/b-axis/ab-axis of the carbon-based negative electrode active material crystal.

Also, in this specification, 'average particle diameter ($D_{50}$)' refers to the particle diameter at which the cumulative value in the particle diameter distribution becomes 50%, also called the median diameter. The average particle diameter can be measured by methods commonly applied in the art. For example, the average particle diameter can be measured using a laser diffraction scattering particle size distribution analyzer or a centrifugal particle size distribution analyzer, or the like. The present disclosure may be measured by an analytical instrument using laser diffraction scattering particle size distribution measurement.

In this specification, 'room temperature' may refer to a temperature in the range of 10°C to 30°C. For example, room temperature may refer to a temperature in the range of 15°C to 30°C; 20°C to 30°C; 21°C to 29°C; 15°C to 26°C; 18°C to 26°C; or 21°C to 26°C.

Hereinafter, the present disclosure will be described in more detail.


**Negative electrode**

The present disclosure provides a negative electrode comprising

a negative electrode current collector,
a first negative electrode active layer disposed on the negative electrode current collector and including a first carbon-based negative electrode active material; and
a second negative electrode active layer disposed on the first negative electrode active layer and including a second carbon-based negative electrode active material:
the negative electrode according to the present disclosure may refer to a negative electrode for lithium secondary battery. The negative electrode comprises a negative electrode active layer on at least one side of the negative electrode current collector. The negative electrode active layer is a layer that implements the electrical activity of the negative electrode, and includes a negative electrode active material as a main component that implements an electrochemical oxidation-reduction reaction during charging and discharging of the battery.

Here, the negative electrode active layer may have a two-layer structure in which a first negative electrode active layer and a second negative electrode active layer are sequentially stacked on the negative electrode current collector. Since the two-layer structure of the negative electrode active layer can easily control the composition of each layer, the performance of the negative electrode can be improved by varying the type or content of the components contained in each layer or controlling the different physical properties according to a specific purpose, such as increasing the energy efficiency of the battery or improving the adhesion between the active layer and the negative electrode current collector.

For example, the first negative electrode active layer and the second negative electrode active layer may be aligned such that a specific crystal surface of the carbon-based negative electrode active material has a predetermined slope based on the negative electrode current collector. In this case, the carbon-based negative electrode active material included in the first negative electrode active layer directly contacting the negative electrode current collector may be aligned such that the specific crystal surface has a low slope with respect to the negative electrode current collector, and the carbon-based negative electrode active material included in the second negative electrode active layer close to the positive electrode may be aligned such that the specific crystal surface is close to vertical with respect to the negative electrode current collector.

In addition, the first negative electrode active layer and the second negative electrode active layer may include a first carbon-based negative electrode active material and a second carbon-based negative electrode active material, respectively. The first carbon-based negative electrode active material and the second carbon-based negative electrode active material included in each negative electrode active layer may be the same and/or different in type and/or content. Specifically, the first carbon-based negative electrode active material and the second carbon-based negative electrode active material refer to a material having carbon atoms as a main component, and such carbon-based negative electrode active material may include graphite. The graphite may comprise any one or more of natural graphite or artificial graphite. For example, the first carbon-based negative electrode active material and the second carbon-based negative electrode active material may each comprise natural graphite or artificial graphite alone, and in some cases may comprise a mixture of natural graphite and artificial graphite.

For example, the first carbon-based negative electrode active material may comprise natural graphite and artificial graphite in a weight ratio of 5 to 50:50 to 95, 20 to 45:55 to 80, or 30 to 50:50 to 70, and the second carbon-based negative electrode active material may comprise artificial graphite alone. In this case, the carbon-based negative electrode active material may include the natural graphite and the artificial graphite in the mixing ratio as described above to implement a highly oriented carbon-based negative electrode active material on the surface of the negative electrode current collector while solidifying the adhesion of the negative electrode current collector and the negative electrode active layer.

In addition, the first carbon-based negative electrode active material and the second carbon-based negative electrode active material may each include artificial graphite alone. The present disclosure can be advantageously applied under conditions requiring frequent charging over a long period of time, such as in automotive batteries, since the lifespan of the negative electrode is significantly improved by including artificial graphite alone in the negative electrode active layer. Moreover, artificial graphite has advantages of being favorable for rapid charging and having excellent output performance compared to natural graphite.

Meanwhile, in order to increase the charging rate during charging of the secondary battery, the movement of lithium ions can be facilitated by controlling the type of carbon-based negative electrode active material included in the negative electrode active layer, or by orienting a specific crystal surface of the carbon-based negative electrode active material (specifically, the (002) crystal surface of graphite) to have a slope close to vertical with respect to the negative electrode current collector. However, in this case, there is a problem that the contact area of the negative electrode current collector and the negative electrode active layer (e.g., the first negative electrode active layer) is significantly reduced, thereby reducing the adhesion therebetween. Accordingly, the present disclosure may improve the adhesion between the negative electrode current collector and the first negative electrode active layer by satisfying one or more of the following conditions:

(Condition 1) Ratio ($D_2/D_1$) of an average particle diameter ($D_2$) of the second carbon-based negative electrode active material to an average particle size ($D_1$) of the first carbon-based negative electrode active material: 2.0 or more,
(Condition 2) Including a carbon structure in the first negative electrode active layer, or
(Condition 3) Including a first thickening agent and a second thickening agent in the first negative electrode active layer and the second negative electrode active layer, respectively.

The present disclosure can increase the specific surface area of the particles included in the first negative electrode active layer by satisfying (condition 1) and/or (condition 2), thereby directly increasing the interfacial adhesion of the negative electrode current collector and the first negative electrode active layer. In addition, by satisfying one or more of the above three conditions, a high room temperature viscosity of the first negative electrode slurry comprising the first carbon-based negative electrode active material can be implemented in manufacturing the negative electrode. The high room temperature viscosity may align the (002) crystal surface of the carbon-based negative electrode active material with

# EP 4 712 157 A1

respect to the surface of the negative electrode current collector during orientation of the carbon-based negative electrode active material using a magnetic field to have a slope lower than 90°, thereby preventing the adhesion between the negative electrode current collector and the first negative electrode active material layer from decreasing.

**(Condition 1)**

Specifically, the negative electrode according to the present disclosure may have different shapes and/or average particle diameters ($D_{50}$) of the first carbon-based negative electrode active material included in the first negative electrode active layer and the second carbon-based negative electrode active material included in the second negative electrode active layer.

The first carbon-based negative electrode active material and the second carbon-based negative electrode active material may each have an average particle diameter ($D_{50}$) satisfying a predetermined range, and they may have a certain particle diameter ratio.

The ratio ($D_2/D_1$) of the average particle diameter ($D_2$) of the second carbon-based negative electrode active material to the average particle diameter ($D_1$) of the first carbon-based negative electrode active material may be in a range of 2.0 or more. For example, the ratio ($D_2/D_1$) may be in a range of 2.0 to 15; 2.0 to 13; 2.0 to 11; 2.0 to 9.0; 2.0 to 7.0; 2.0 to 6.0; 2.0 to 5.0; 3.0 to 8.0; 3.0 to 7.0; 3.0 to 4.5; 4.0 to 7.0; 5.0 to 7.0; 4.0 to 10; 4.0 to 9.0; 6.0 to 11; 8.0 to 14; 9.0 to 13; or 3.1 to 5.5.

The present disclosure can improve the adhesion between the negative electrode current collector and the first negative electrode active layer by satisfying the above-described range of the average particle diameter ratio ($D_2/D_1$) of the second carbon-based negative electrode active material and the first carbon-based negative electrode active material, thereby improving the lifespan of the negative electrode. In addition, in the above-described range, the negative electrode of the present disclosure can significantly improve the charging rate of the secondary battery not only under high-rate conditions, but also at low rates of 1C or less, and thus has the advantage of being capable of charging in a short time even at 1C-rate.

The average particle diameter ($D_1$) of the first carbon-based negative electrode active material may be in a range of less than 5 $\mu$m, and the average particle diameter ($D_2$) of the second carbon-based negative electrode active material may be in a range of 10 $\mu$m to 25 $\mu$m.

For example, the average particle diameter ($D_1$) of the first carbon-based negative electrode active material is in a range of 0.1$\mu$m to 4.9$\mu$m; 0.5$\mu$m to 4.9$\mu$m; 0.5$\mu$m to 4.5$\mu$m; 0.5$\mu$m to 4.0$\mu$m; 0.5$\mu$m to 3.5$\mu$m; 0.5$\mu$m to 3.0$\mu$m; 0.5$\mu$m to 2.5$\mu$m; 1.0$\mu$m to 4.6$\mu$m; 1.5$\mu$m to 4.9$\mu$m; 2.0$\mu$m to 4.9$\mu$m; 2.5$\mu$m to 4.9$\mu$m; 0.8$\mu$m to 1.5$\mu$m; 2.5$\mu$m to 3.5$\mu$m; 2.7$\mu$m to 4.6$\mu$m; 3.5$\mu$m to 4.9$\mu$m; or 4.1$\mu$m to 4.9$\mu$m.

The first carbon-based negative electrode active material is a primary particle having an average particle diameter ($D_1$) of less than 5 $\mu$m, which can significantly increase the specific surface area according to the small particle diameter, thereby further strengthening the adhesion between the negative electrode current collector and the first negative electrode active layer. However, when the average particle diameter ($D_1$) of the first carbon-based negative electrode active material is lower than the lower limit value of the range described above, a large amount of binder is required due to an increase in the number of particles per unit volume, and thus the electrical properties of the negative electrode active layer including them may be decreased. In addition, when the average particle diameter ($D_1$) of the first carbon-based negative electrode active material is higher than the upper limit value of the range described above, the specific surface area of the first carbon-based negative electrode active material is significantly reduced, so that the effect of improving the adhesion between the negative electrode current collector and the first negative electrode active layer may be insignificant.

In addition, the average particle diameter ($D_2$) of the second carbon-based negative electrode active material may be in a range of 10$\mu$m to 22.5$\mu$m; 11$\mu$m to 20$\mu$m; 11$\mu$m to 17.5$\mu$m; 11$\mu$m to 15$\mu$m; 11$\mu$m to 19$\mu$m; 13$\mu$m to 17$\mu$m; 17$\mu$m to 22$\mu$m; 14$\mu$m to 18$\mu$m; 14$\mu$m to 22$\mu$m; 16$\mu$m to 21$\mu$m; or 14.5$\mu$m to 16.5$\mu$m.

The second carbon-based negative electrode active material is an assembly formed by assembling 2 to 100, preferably 3 to 20 active material particles, and has a large particle diameter compared to the first carbon-based negative electrode active material, thereby the electrical properties of the secondary battery can be further improved during charging and discharging, and safety issues can be improved. For example, when the average particle diameter ($D_2$) of the second carbon-based negative electrode active material is lower than the lower limit value of the range described above, the transport path of the lithium ions formed in the interior of the second negative electrode active layer may become longer, thereby reducing the charge and discharge efficiency of the secondary battery.

Generally, the sphericity of the carbon-based negative electrode active material is one of the indicators of the shape of the particles, and depending on the shape of the carbon-based negative electrode active material, the electrical performance or adhesion of the negative electrode active layer may be different. The present disclosure differentiates the shape/morphology of the carbon-based negative electrode active material contained in each negative electrode active layer, which can simultaneously improve the output and rapid charging of the negative electrode while increasing the adhesion between the negative electrode current collector and the negative electrode active layer.

Specifically, the first carbon-based negative electrode active material contained in the first negative electrode active layer may have a sphericity of 0.9 or more, and the second carbon-based negative electrode active material contained in the second negative electrode active layer may have a sphericity of less than 0.9.

For example, the first carbon-based negative electrode active material may have a sphericity in a range of 0.90 to 1.00; 0.90 to 0.99; 0.92 to 0.98; 0.95 to 0.99; 0.92 to 0.97; 0.95 to 0.98; or 0.90 or more but less than 1.0. In addition, the second carbon-based negative electrode active material may have a sphericity in the range of 0.10 to 0.75; 0.25 to 0.75; 0.25 to 0.70; 0.25 to 0.60; 0.25 to 0.50; 0.25 to 0.40; 0.40 to 0.65; 0.50 to 0.70; 0.50 to 0.65; 0.60 to 0.75; 0.20 to 0.35; 0.10 to 0.40; 0.40 to 0.50; or in a range of 0.2 to more and less than 0.7.

The present disclosure may refer to "sphericity" as the ratio of the shortest diameter (short diameter) to the longest diameter (long diameter) of any diameter through the center of a particle in a two-dimensional projection of a carbon-based negative electrode active material. When the sphericity is 1, the particle may have a spherical shape. The sphericity may be determined by measuring it with a particle shape analyzer, or by measuring the shape of the particle using a scanning electron microscope (SEM), energy dispersive spectrometer, or the like, and then analyzing the measured results.

In other words, the present disclosure may mean that the first carbon-based negative electrode active material may have a spherical shape, and the second carbon-based negative electrode active material may have the shape of an ellipsoid stretched in any one direction based on the center of the particle. The spherical shape of the first carbon-based negative electrode active material may minimize the volume of the particles, which may increase the density of the first negative electrode active layer, and may increase the area contacted by the first negative electrode active layer at the boundary with the negative electrode current collector, which may further increase the energy density of the first negative electrode active layer and the adhesion to the negative electrode current collector. In addition, the second carbon-based negative electrode active material having a unidirectionally stretched ellipsoid shape has the advantage of reducing the surface roughness on the surface of the second negative electrode active layer, which can further increase the migration speed of lithium ions, thereby increasing the output performance of the negative electrode.

(Condition 2)

In addition, the negative electrode according to the present disclosure may include a carbon structure having a predetermined size in the first negative electrode active layer. In this case, the carbon structure has an average size at the level of nanometers (nm) and refers to a material in which the main component is composed of carbon atoms (C).

The carbon structure performs a function of increasing the viscosity of the first negative electrode slurry without reducing the performance of the first carbon-based negative electrode active material included in the first negative electrode slurry forming the first negative electrode active layer in manufacturing the negative electrode. Specifically, "room temperature viscosity" refers to the magnitude of physical and/or chemical interactions, such as friction, resistance, etc., between each of the raw materials (e.g., carbon-based negative electrode active material, additives, conductive materials, binders, etc.) present in the inside of the negative electrode slurry at room temperature. Such interactions will increase as the number of raw materials, in other words, the number of particles, increases, even for raw materials having the same volume fraction. The present disclosure can increase the viscosity by applying carbon structures having an average size at the nanometer (nm) level to the first negative electrode slurry forming the first negative electrode active layer in manufacturing of the negative electrode. In addition, a thickening agent such as carboxymethylcellulose (CMC) conventionally used to control the viscosity of a negative electrode slurry has a limitation that the electrical resistance of the manufactured negative electrode active layer increases as the amount used increases, and the content of the first carbon-based negative electrode active material in the manufactured first negative electrode slurry is reduced, resulting in a lower charge and discharge capacity. However, the present disclosure can increase the viscosity of the first negative electrode slurry without influencing the electrical properties of the first negative electrode slurry by applying a carbon structure instead of a thickening agent such as carboxymethylcellulose (CMC) or the like, thereby implementing a high orientation index ($O.I_{1st}$) of the manufactured first negative electrode active layer.

Such carbon structure may include one or more types of carbon nanotubes, carbon nanofilaments, nanofibers, fullerene, graphene, or graphite having an average size at the nanometer (nm) level.

For example, the carbon structure may include carbon nanotubes comprising one or more of single-walled carbon nanotubes (S.W.CNT) or multi-walled carbon nanotubes (M.W.CNT). The carbon nanotube may have a size at the nanometer (nm) level to increase the orientation index ($O.I_{1st}$) of the first negative electrode active layer in which the carbon-based negative electrode active material is oriented by the magnetic field. In addition, the carbon nanotubes may have a linear structure and form a network between the carbon nanotubes in the first negative electrode active layer, thereby enabling a high electrical conductivity to be implemented, thereby lowering the interface resistance generated at the interface of the negative electrode current collector and the first negative electrode active layer. Such lower interface resistance may offset a reduction in the charging rate during charging of the secondary battery due to a high orientation index (O.I.) of the first carbon-based negative electrode active material.

The carbon structure may have an average size in the range of 5 nm to 900 nm, specifically in the range of 5 nm to 750 nm; 5 nm to 500 nm; 5 nm to 250 nm; 5 nm to 100 nm; 50 nm to 200 nm; 50 nm to 400 nm; 100 nm to 500 nm; 100 nm to 250 nm; 250 nm to 500 nm; 300 nm to 700 nm; 500 nm to 900 nm; 700 nm to 900 nm; 600 nm to 800 nm; 150 nm to 300 nm; 10 nm to 90 nm; 50 nm to 90 nm; 50 nm to 150 nm; 110 nm to 390 nm; or 310 nm to 490 nm.

As used herein, "average size" may be interpreted differently depending on the shape of the carbon structure. For example, for carbon structures having a two-dimensional linear structure, such as carbon nanotubes, carbon nanofilaments, nanofibers, and the like, it may mean any one of the average diameter and average length of the linear structure, or a median value thereof. The present disclosure may mean a median value of the average diameter and the average length of the carbon structure. In this case, the average diameter may be in a range of several to tens of nm (e.g., 1 nm to 99 nm), the average length may be in a range of several nm to tens of $\mu$m (e.g., 11 nm to 99 $\mu$m), and the average length may have a value greater than the average diameter. Specifically, when a carbon structure having a two-dimensional linear structure has an average diameter of 10 nm and an average length of 350 nm, the average size may be 180 nm. In addition, a carbon structural body having a three-dimensional spherical structure, such as a fullerene, may have an average diameter thereof as the average size. Moreover, a carbon structural body of a two-dimensional plane structure, such as graphene and graphite, may mean an average value of the shortest diameter (short diameter) and the longest diameter (long diameter) of any diameter passing through the center of the particle. In addition, the average size of the carbon structure can be determined through a two-dimensional projection image analyzed by a scanning electron microscope (SEM) or a transmission electron microscope (TEM) or the like of a cross-section of the first negative electrode active layer identified upon cutting in the thickness direction of the negative electrode, and in some cases, through information of a commercially obtained carbon structure. For example, the average size of the carbon structures may be calculated from a two-dimensional projected image analyzed by a scanning electron microscope (SEM).

The carbon structure may be applied to the first negative electrode active layer in a predetermined content range. Specifically, the carbon structure may be included in the first negative electrode active layer in the range of 0.001 wt.% to 10 wt.% based on the total weight of the first negative electrode active layer. More specifically, the carbon structure may be included in the first negative electrode active layer in an amount in the range of 0.001 wt.% to 9 wt.%; 0.001 wt.% to 7 wt.%; 0.001 wt.% to 5 wt.%; 0.001 wt.% to 3 wt.%; 0.001 wt.% to 1 wt.%; 0.001 wt.% to 0.5 wt.%; 0.01 wt.% to 0.5 wt.%; 0. 1 wt.% to 2 wt.%; 1 wt.% to 10 wt.%; 1 wt.% to 8 wt.%; 1 wt.% to 6 wt.%; 1 wt.% to 5 wt.%; 1 wt.% to 3 wt.%; 3 wt.% to 8 wt.%; 6 wt.% to 9 wt.%; 5 wt.% to 8 wt.%; 2 wt.% to 4 wt.%; or 1.5 wt.% to 4.5 wt.%. The content of the carbon structure may be adjusted according to the type and average size applied to the first negative electrode active layer.

For example, the first negative electrode active layer may comprise single-walled carbon nanotubes (S.W.CNT) as the carbon structure in a range of 0.01 wt.% to 0.9 wt.%, based on the total weight of the first negative electrode active layer.

In addition, the first negative electrode active layer may comprise multi-walled carbon nanotubes (M.W.CNT) as the carbon structure in a range of 1 wt.% to 8 wt.% based on the total weight of the first negative electrode active layer.

(Condition 3)

Further, the negative electrode according to the present disclosure includes a first thickening agent and a second thickening agent in the first negative electrode active layer and the second negative electrode active layer, respectively. The first thickening agent and the second thickening agent are included in the first negative electrode slurry and the second negative electrode slurry, respectively, when the first negative electrode active layer and the second negative electrode active layer are formed, and perform the function of making the respective slurries have a viscosity higher than the intrinsic viscosity of the respective slurries.

The present disclosure can implement different viscosities of the respective negative electrode slurries by including the same content ratio of the thickening agents based on the total weight of the solid content in the negative electrode slurry to comprise each negative electrode active layer in manufacturing the negative electrode, but varying the concentrations included in each negative electrode slurry in manufacturing the negative electrode. Specifically, in the present disclosure, the first thickening agent and the second thickening agent are included in the same weight ratio based on the total weight of the solid content of the negative electrode slurry (in other words, the total weight of the negative electrode active layer) to comprise each negative electrode active layer, but the viscosity of the first negative electrode slurry can be implemented higher than the viscosity of the second negative electrode slurry by making the concentration of the first thickening agent solution applied to the first negative electrode slurry higher than the concentration of the second thickening agent solution applied to the second negative electrode slurry.

The viscosity of the negative electrode slurry not only influences the loading amount and thickness of the negative electrode active layer, but also acts mainly on the alignment of the carbon-based negative electrode active material included in the interior when applying magnetic field to the negative electrode slurry. The negative electrode slurry having a high viscosity result in a low orientation of the carbon-based negative electrode active material included in the interior when applying magnetic field, making it difficult to implement a high slope to the negative electrode current collector. Therefore, the present disclosure controls the viscosity of the first negative electrode slurry to be relatively higher than the viscosity of the second negative electrode slurry, thereby enabling the orientation index ($O.I_{1st}$) of the first negative electrode active layer derived therefrom to be larger than the orientation index ($O.I_{2nd}$) of the second negative electrode active layer.

In this case, the first thickening agent and the second thickening agent may be those conventionally applied in the art to control the viscosity of the electrode slurry. Specifically, the first thickening agent and the second thickening agent may each comprise one or more types of carboxymethylcellulose (CMC), polyvinyl alcohol (PVA), polyvinyl butyral (PVB), polyN-vinylacetamide (PNVA), styrene-butadiene rubber (SBR), acrylic-based resin, or fluorine-based resin.

In addition, the first thickening agent and the second thickening agent may be included in a range of 0.5 wt.% to 3 wt.% based on the total weight of the first negative electrode active layer and the second negative electrode active layer, respectively. For example, the first thickening agent and the second thickening agent may be included in a range of 0.5 wt.% to 2 wt.%; 0.5 wt.% to 1 wt.%; 1 wt.% to 3 wt.%; 1 wt.% to 2 wt.%; 1.5 wt.% to 3 wt.%; 0.5 wt.% to 1.9 wt.%; or 1.1 wt.% to 1.9 wt.%, based on the total weight of the first negative electrode active layer and the second negative electrode active layer.

In addition, the content ratio of the first thickening agent may have a ratio of from 80% to 120% based on the content ratio of the second thickening agent, specifically a ratio of from 90% to 110%; or from 95% to 105%.

For example, wherein the first thickening agent and the second thickening agent are each carboxymethylcellulose (CMC), and are included in a range of 1.2 wt.% to 1.7 wt.% with respect to the total weight of each negative electrode active layer, the content ratio of the first thickening agent may have a ratio of $100\pm2\%$ based on the content ratio of the second thickening agent.

Meanwhile, when the negative electrode according to the present disclosure satisfies (condition 2) and/or (condition 3), the first carbon-based negative electrode active material and the second carbon-based negative electrode active material may or may not satisfy (condition 1) in terms of average particle diameter ($D_{50}$) and/or shape. Specifically, when not satisfying (condition 1), the first carbon-based negative electrode active material and the second carbon-based negative electrode active material may each have an average particle diameter ($D_{50}$) in the range of 0.1 $\mu$m to 20 $\mu$m and a sphericity in the range of 0.8 or less.

For example, the average particle diameter ($D_{50}$) of the first carbon-based negative electrode active material and the second carbon-based negative electrode active material may be in the range of 5$\mu$m to 20$\mu$m; 10$\mu$m to 20$\mu$m; 11$\mu$m to 19$\mu$m; 8$\mu$m to 15$\mu$m; 15$\mu$m to 20$\mu$m; 13$\mu$m to 19$\mu$m; 14$\mu$m to 17$\mu$m; 5$\mu$m to 8$\mu$m; 0.1$\mu$m to 15$\mu$m; 0.1$\mu$m to 10$\mu$m; 0.1$\mu$m to 8$\mu$m; 0.1$\mu$m to 5$\mu$m; 0.1$\mu$m to 3$\mu$m; 0.1$\mu$m to 1$\mu$m; 0.5$\mu$m to 10$\mu$m; 0.5$\mu$m to 5$\mu$m; 0.5$\mu$m to 4.5$\mu$m; 0.5$\mu$m to 3$\mu$m; 1$\mu$m to 4.5$\mu$m; 1$\mu$m to 3$\mu$m; or 0.8$\mu$m to 1.8$\mu$m.

The present disclosure can suppress an increase in the electrical resistance of the first negative electrode active layer by controlling the average particle diameter of the first carbon-based negative electrode active material to the above range. In addition, the first carbon-based negative electrode active material can increase the specific surface area in the average particle diameter range while maximizing the degree of disorder in the expansion direction for each of the particles so as to prevent the expansion of the particles due to the charging of the lithium ions. Thus, the adhesion between the first negative electrode active layer comprising the same and the negative electrode current collector can be further increased. In addition, the present disclosure has the advantage that by adjusting the average particle diameter of the second carbon-based negative electrode active material to the above range, the electrical conductivity of the second negative electrode active layer can be increased, simultaneously securing a transport path for lithium ions.

On the other hand, when the first carbon-based negative electrode active material and the second carbon-based negative electrode active material have a particle diameter lower than the lower limit value of the above average particle diameter ($D_{50}$), a large amount of binder is needed due to an increase in the number of particles per unit volume, and thus the electrical properties of the negative electrode active layer including the same may be decreased. In addition, when the first carbon-based negative electrode active material and the second carbon-based negative electrode active material have a higher particle diameter than the upper limit value of the average particle diameter ($D_{50}$), the expansion rate of the negative electrode active material increases significantly during charging and discharging of the secondary battery, and thus the binding property of the negative electrode active material particles and the binding property of the negative electrode active material particles and the current collector may decrease as the charging and discharging are repeated, resulting in a significant reduction in the cycle characteristics.

In addition, the first carbon-based negative electrode active material and the second carbon-based negative electrode active material may each have a sphericity in the range of 0.10 to 0.80; 0.25 to 0.80; 0.35 to 0.80; 0.25 to 0.70; 0.25 to 0.60; 0.25 to 0.50; 0.25 to 0.40; 0.40 to 0.65; 0.50 to 0.80; 0.50 to 0.65; 0.60 to 0.80; 0.60 to 0.75; 0.70 to 0.05; 0.10 to 0.40; or 0.2 or more and less than 0.8.

The sphericity of 0.80 or less, specifically 0.60 or less, may mean having the shape of an ellipsoid stretched in any one direction based on the center of the particle. The present disclosure can further shorten the transport path of the lithium ions formed in the interior of the first negative electrode active layer and the second negative electrode active layer by satisfying the sphericity of the first carbon-based negative electrode active material and the second carbon-based negative electrode active material to the above-described range. Accordingly, the negative electrode can increase the output characteristics and shorten the charging time to a shorter period. Specifically, the first carbon-based negative electrode active material and the second carbon-based negative electrode active material may significantly increase the surface roughness at the negative electrode surface when the respective sphericity exceeds an upper limit value of the above-described range. In this case, the negative electrode active layer has a problem that the movement speed of the lithium ions is reduced, and thus the charging rate of the secondary battery is lowered during charging. In addition, when the first carbon-based negative electrode active material and the second carbon-based negative electrode active material have respective sphericities less than the lower limit value of the above-described range, the electrical conductivity of the carbon-based negative electrode active material itself is reduced, and thus the capacity of the negative electrode may be decreased. In particular, in the case of the first carbon-based negative electrode active material, the contact area between the negative electrode current collector and the negative electrode active layer is significantly reduced, so even if the orientation index of the first negative electrode active layer is controlled, there is a limitation that the adhesion between the negative electrode current collector and the first negative electrode active layer is significantly reduced.

Further, the negative electrode according to the present disclosure may have controlled crystalline characteristics of the carbon-based negative electrode active materials contained in the first negative electrode active layer and the second negative electrode active layer, respectively, in order to implement a rapid charging rate while increasing the adhesion between the first negative electrode active layer and the negative electrode current collector.

For example, the second negative electrode active layer may have an orientation index ($O.I_{2nd}$) of 6 or less according to Formula 1 below:

$$[\text{Formula 1}]$$

$$O.I = I_{004}/I_{110}$$

wherein $I_{004}$ indicates the peak area value representing the (004) crystal surface in X-ray diffraction spectroscopy (XRD) analysis of the negative electrode active layer,
wherein $I_{110}$ indicates the peak area value representing the (110) crystal surface in X-ray diffraction spectroscopy (XRD) analysis of the negative electrode active layer.

The orientation index (O.I.) of the carbon-based negative electrode active material may be an indicator of the degree of orientation of the ab-axis crystal surface of the carbon-based negative electrode active material in a certain direction, specifically with respect to the surface of the negative electrode current collector in an X-ray diffraction (XRD) measurement. For example, the negative electrode active layer shows peaks of $2\theta=26.5\pm0.2°$, $42.4\pm0.2°$, $43.4\pm0.2°$, $44.6\pm0.2°$, $54.7+0.2°$, and $77.5\pm0.2°$ for the carbon-based negative electrode active material, graphite, in the X-ray diffraction measurement. These represent the (002) surface, (100) surface, (101) R surface, (101) H surface, (004) surface, and (110) surface of the graphite, respectively. Here, the peak appearing at $2\theta=43.4\pm0.2°$ may be seen as an overlap of the peaks corresponding to the (101)R surface of the carbon-based negative electrode active material and the (111) surface of the current collector, for example, copper (Cu).

Of these, the orientation index (O.I.) of the carbon-based negative electrode active material can be measured through the ratio of areas obtained by integrating each intensity of the peak at $2\theta=54.7\pm0.2°$ representing the (004) surface and the peak at $2\theta=77.5\pm0.2°$ representing the (110) surface.

Since the peak at $2\theta=54.7\pm0.2°$ is a peak indicative of a crystal surface of the carbon-based negative electrode active material having a slope with the negative electrode current collector, the orientation index (O.I) may mean that when the value is close to 0, the slope with respect to the surface of the negative electrode current collector is close to 90°, and when the value is larger, the slope with respect to the surface of the negative electrode current collector is close to 0° or 180°. In other words, the negative electrode active layer according to the present disclosure may include in the layer a carbon-based negative electrode active material aligned to have an angle of 60° or more, 70° or more, 70° to 90°, 80° to 90°, 65° to 85°, or 70° to 85° with respect to the negative electrode current collector if the orientation index (O.I.) has a low value close to 0. In other words, the orientation index (O.I.) may indicate the degree to which the crystal surface of the carbon-based negative electrode active material are aligned to the surface of the negative electrode current collector. In addition, in some cases, the orientation index (O.I) may indicate the degree of alignment of the ab-axis crystal surface of the carbon-based negative electrode active material in the negative electrode active layer. When aligning the ab-axis crystal surface of the carbon-based negative electrode active material, the rotation of the particles themselves of the carbon-based negative electrode active material contained in the negative electrode active layer may also be induced. However, since the rotation of the particles at this time is influenced by the shape of the particles and thus is not equivalent compared to the degree of alignment of the ab-axis crystal surface, it may be difficult for the orientation index (O.I.) to indicate that the particles of the carbon-based negative electrode active material are aligned.

The negative electrode according to the present disclosure may have a first negative electrode active layer having a greater orientation index (O.I.) than the second negative electrode active layer. This means that the crystal surface of the first carbon-based negative electrode active material included in the first negative electrode active layer has a lower angle slope with respect to the negative electrode current collector than the crystal surface of the second carbon-based negative electrode active material included in the second negative electrode active layer.

For example, the second negative electrode active layer may have an orientation index (O.I$_{2nd}$) in the range of 0.5 to 6, and specifically in the range of 1 to 5; 1 to 3; 1.5 to 6; 3 to 6; 4.5 to 6; 2.5 to 5; 4 to 6; 2.5 to 4.5; 2.1 to 5.0; 2. 1 to 4.0; 2.3 to 4.5; 2.4 to 5.5; 1.5 to 2.9; 1.6 to 2.9; 2.1 to 3.3; 1.6 to 3.0; 3 to 4.5; 3 to 5.5; 4.5 to 5.5; 4.1 to 4.9; 4.9 to 5.6; 5 to 6; or 5.5 to 6.

The present disclosure may obtain an ion migration channel in which lithium ions can migrate in a shorter distance in the interior of the negative electrode active layer by adjusting the orientation index (O.I$_{2nd}$) of the carbon-based negative electrode active material contained in the second negative electrode active layer as described above. As a result, the negative electrode of the present disclosure can prevent an increase in resistance due to a long migration distance of the lithium ions, and thus can further increase the migration speed of the lithium ions during charging and discharging, thereby simultaneously improving rapid charging performance and output performance with high safety.

Specifically, conventionally, rapid charging of lithium secondary batteries has been performed by a constant current-constant voltage (CC-CV) method of charging, which increases the rate by performing charging under high C-rate conditions exceeding 1C-rate. In general, in the constant current-constant voltage (CC-CV) method of charging, the diffusion of lithium ions in the electrode proceeds during the constant current (CC) charging step, which inevitably causes concentration polarization due to prolonged diffusion. Such concentration polarization of lithium ions easily causes lithium precipitation at the negative electrode, especially under high-rate conditions where the amount of current (A) charged compared to the rated capacity value (Ah) of the secondary battery exceeds the standard value (in other words, the amount of current at 1C-rate: 1A), which has the limitation of significantly lowering the safety of the secondary battery. In addition, the high-rate constant current-constant voltage (CC-CV) method of charging reaches the upper limit value at a very rapid rate in the constant current (CC) charging step, so that the current may decline to a predetermined limit value before the active material is fully consumed; in other words, the charging time is significantly increased in the constant voltage (CV) charging step, so that the reduction effect of the total time to charge the secondary battery is insignificant.

However, the present disclosure can secure a short ion migration channel of lithium ions in the negative electrode active layer, thereby significantly reducing the resistance induced in the negative electrode active layer during charging. Such a reduction in resistance may lead to the performance time of the constant current (CC) charging step to be longer than the performance time of the constant voltage (CV) charging step in the total charging time when charging by the constant current-constant voltage (CC-CV) method of charging. Here, the constant current (CC) charging step has the same charge capacity per unit time because the same amount of current flows, but the constant voltage (CV) charging step shows a tendency that the current is reduced to maintain the same voltage. In other words, the charge capacity per unit time is drastically reduced in the constant voltage (CV) charging step, and thus the overall charging time can be significantly reduced as the performance time of the constant current (CC) charging step increases. Accordingly, the present disclosure can increase the performance time of the constant current (CC) charging step by controlling the orientation index (O.I$_{2nd}$) of the second carbon-based negative electrode active material, thereby completing the charging of the secondary battery in a significantly shorter time.

Moreover, since the rapid charging of such a secondary battery can be implemented under standard value (e.g., 1C-rate) conditions rather than high-rate C-rate conditions, it has the advantage of overcoming a safety problem of a lithium secondary battery caused by a concentration polarization phenomenon of lithium ions induced in the negative electrode active layer during charging.

The first carbon-based negative electrode active material contained in the first negative electrode active layer may be aligned such that the orientation index (O.I$_{1st}$) is in a range of 5 or more, specifically in the range of 5 to 20; 5 to 15; 5 to 13; 5 to 10; 8 to 20; 8 to 17; 8 to 15; 8 to 13; 8 to 10; 10 to 17; 10 to 14.5; 10 to 13; 10.5 to 12; 11 to 15; 15 to 19; or 9 to 14.

When the orientation index (O.I$_{1st}$) of the first negative electrode active layer is less than the lower limit value of the above-described range, the adhesion with the negative electrode current collector may be reduced. Therefore, the present disclosure provides that by adjusting the orientation index (O.I$_{1st}$) of the first carbon-based negative electrode active material contained in the first negative electrode active layer as described above, the adhesion between the first negative electrode active layer and the negative electrode current collector may be improved in a range in which the rapid charging performance of the negative electrode is not reduced because the surface ratio of the crystal surface of the carbon-based negative electrode active material comprising the negative electrode active material particles facing the negative electrode current collector is increased. In addition, when the orientation index (O.I$_{1st}$) of the first negative electrode active layer exceeds an upper limit value of the range described above, it is difficult for the lithium ions to be easily inserted and deintercalated from the interior of the first negative electrode active layer, and thus, the charge capacity of the negative electrode may be reduced and the charging time is delayed.

In addition, the first negative electrode active layer may have an orientation index (O.I$_{1st}$) represented by formula 1 having a ratio of 200% to 900% based on the orientation index (O.I$_{2nd}$) of the second negative electrode active layer.

Specifically, the orientation index (O.I$_{1st}$) of the first negative electrode active layer may have a ratio in the range of 200% to 900%; 200% to 700%; 200% to 500%; 200% to 400%; 210% to 290%; 250% to 400%; 370% to 590%; 300% to 500%; 400% to 830%; 400% to 700%; 400% to 600%; 400% to 550%; 450% to 750%; 210% to 450%; 600% to 800%; 600% to 900%; 410% to 580%; 410% to 500%; 410% to 490%; 510% to 580%; 420% to 450%; 440% to 500%; 460% to 550%; or 510% to 560% based on the orientation index (O.I$_{2nd}$) of the second negative electrode active layer.

The present disclosure can prevent the adhesion with the negative electrode current collector from being reduced due to a value lower than the lower limit value of the above-described range by controlling the percentage (O.I$_{1st}$/O.I$_{2nd}$*100) of the orientation index (O.I$_{1st}$) of the first negative electrode active layer and the orientation index (O.I$_{2nd}$) of the second negative electrode active layer to the above-described range. In addition, the present disclosure can prevent the migration speed of the lithium ions from being reduced due to a value higher than the upper limit value of the above-described range, thereby further improving the charging rate of the secondary battery.

Meanwhile, the first negative electrode active layer and the second negative electrode active layer according to the present disclosure may selectively further include conductive materials, binders, other additives, and the like as needed, with the carbon-based negative electrode active material as the main component.

The conductive material may include one or more types of carbon black, acetylene black, carbon nanotubes, carbon fibers, graphene, or the like, but is not limited thereto.

For example, the first negative electrode active layer and the second negative electrode active layer may each contain carbon black or carbon fiber or the like as a conductive material alone or in combination.

In this case, the content of the conductive material may be 0.1 to 10 parts by weight based on 100 parts by weight of the entire negative electrode active layer, and specifically may be 0.1 to 8 parts by weight, 0.1 to 5 parts by weight, 0.1 to 3 parts by weight, 2 to 6 parts by weight, or 0.5 to 2 parts by weight. By controlling the content of the conductive material within the above range, the present disclosure can prevent the decrease in charging capacity due to increased resistance of the negative electrode caused by low content of conductive material, and can prevent problems such as decreased charging capacity due to reduced content of negative electrode active material caused by excess conductive material or decrease in rapid charging characteristics due to increased loading amount of the negative electrode active layer.

Moreover, the binder, as a component that assists in coupling the negative electrode active material and conductive material, and binding to the current collector, can be appropriately applied within a range that does not decrease the electrical properties of the electrode. Specifically, the binder may include any one or more of vinylidene fluoride-hexafluoropropylene copolymer (PVDF-co-HFP), polyvinylidene fluoride (polyvinylidenefluoride, PVdF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), or fluorine rubber.

The content of the binder may be from 0.1 to 10 parts by weight, and specifically from 0.1 to 8 parts by weight, from 0.1 to 5 parts by weight, from 0.1 to 3 parts by weight, or from 2 to 6 parts by weight, based on a total of 100 parts by weight of the negative electrode active layer. The present disclosure can control the content of the binder contained in the negative electrode active layer to the above range, thereby preventing the adhesion of the active layer from decreasing due to a low content of the binder or the electrical properties of the electrode from decreasing due to an excess of the binder.

In addition, the negative electrode may have an average thickness of the entire negative electrode active layer in a range of 50 μm to 500 μm, more specifically, in a range of 100 μm to 400 μm; 200 μm to 350 μm; 50 μm to 180 μm; 80 μm to 150 μm; 100 μm to 250 μm; 100 μm to 250 μm; or 130 μm to 190 μm.

The present disclosure can easily control the crystalline characteristics of each carbon-based negative electrode active material contained in the first negative electrode active layer and the second negative electrode active layer by adjusting the average thickness of the negative electrode active layer to the above range. Accordingly, the negative electrode of the present disclosure not only has the advantage of implementing a high adhesion between the first negative electrode active layer and the negative electrode current collector, but also has the advantage of enabling rapid charging that can complete charging in a short time even under standard conditions (1C-rate).

The first negative electrode active layer and the second negative electrode active layer may have the same or different respective average thicknesses. Specifically, the average thickness ($L_1$) of the first negative electrode active layer may have a ratio ($L_1/L_2$) of 1% to 100% based on the average thickness ($L_2$) of the second negative electrode active layer, and specifically, may have a ratio of 1% to 50%; 1% to 40%; 1% to 30%; 1% to 20%; 1% to 10%; 1% to 5%; 5% to 10%; 10% to 20%; or 15% to 30%. The present disclosure can implement a high charge and discharge capacity while maintaining a high durability of the negative electrode by adjusting the average thickness ratio of the first negative electrode active layer to the above range, and can maximize the output characteristics.

The negative electrode current collector is not particularly limited as long as it has a high conductivity without causing chemical changes in the battery. For example, as the negative electrode current collector, a thin plate or film including copper, stainless steel, nickel, titanium, calcined carbon, or the like may be used, and in the case of copper or stainless steel, a surface treatment with carbon, nickel, titanium, silver, or the like may be used. In addition, the average thickness of the negative electrode current collector may be appropriately applied from 1 μm to 500 μm in consideration of the conductivity and total thickness of the manufactured negative electrode.

The negative electrode according to the present disclosure is characterized by having a high adhesion to the negative electrode current collector by having the above-described configuration, and thus has excellent lifespan characteristics. In addition, a lithium secondary battery including the same has the advantage of having excellent output characteristics and can be charged in a short time even at a 1C-rate.

## Manufacturing method of negative electrode

In addition, the present disclosure, in one aspect, provides a manufacturing method of a negative electrode which includes the steps of:

coating at least one side of a negative electrode current collector with a first negative electrode slurry comprising a first carbon-based negative electrode active material (S1),
coating a second negative electrode slurry comprising a second carbon-based negative electrode active material on the coated first negative electrode slurry (S2),
applying magnetic field to the negative electrode current collector to which the second negative electrode slurry is applied (S3); and
drying the first negative electrode slurry and the second negative electrode slurry to which the magnetic field is applied to form a first negative electrode active layer and a second negative electrode active layer (S4).

A manufacturing method of a negative electrode according to the present disclosure refers to a method for manufacturing a negative electrode of the present disclosure as described above. The manufacturing method of the negative electrode can manufacture a negative electrode having a negative electrode active material layer having controlled crystalline characteristics by coating a negative electrode slurry on a negative electrode current collector, applying a magnetic field to the surface of the coated negative electrode slurry, and drying each negative electrode slurry.

Here, the step of coating the negative electrode slurry (S1 and S2) is a step of coating the surface of the moving negative electrode current collector by discharging a negative electrode slurry containing a carbon-based negative electrode active material. This step may be applied in any manner conventionally applied in the art without being particularly limited, but preferably a die coating method may be used. The die coating method may be performed by means of a slot die having a shim for controlling the discharge condition of the negative electrode slurry. In this case, by controlling the shape, position, etc. of the shim, the loading amount, coating thickness, etc. of the negative electrode slurry applied on the negative electrode current collector can be easily controlled.

In particular, in the present disclosure, a first negative electrode slurry and a second negative electrode slurry can be coated simultaneously on the negative electrode current collector using a dual die. In this case, there is an advantage that the process efficiency can be significantly increased compared to coating each slurry sequentially.

In addition, the first negative electrode slurry and the second negative electrode slurry include a first carbon-based negative electrode active material and a second carbon-based negative electrode active material, respectively, as a main component.

Specifically, the first negative electrode slurry and the second negative electrode slurry may comprise from 80 parts by weight to 99.8 parts by weight of the first carbon-based negative electrode active material and the second carbon-based negative electrode active material, respectively, based on the total weight of the negative electrode slurry, and specifically may comprise 95 parts by weight or more, 98 parts by weight or more, 84 parts by weight to 99.8 parts by weight, 90 parts by weight to 99.8 parts by weight, 94 parts by weight to 99.8 parts by weight, 88 parts by weight to 96 parts by weight, or 92 parts by weight to 97.5 parts by weight.

The first negative electrode slurry and the second negative electrode slurry may satisfy one or more of the following conditions in order to increase the adhesion between the negative electrode current collector and the first negative electrode active layer formed on the negative electrode current collector, while improving the charging performance of the negative electrode:

(Condition A) Ratio $(D_2/D_1)$ of an average particle diameter $(D_2)$ of the second carbon-based negative electrode active material to an average particle size $(D_1)$ of the first carbon-based negative electrode active material: 2.0 or more,
(Condition B) Including a carbon structure in the first negative electrode slurry, and
(Condition C) Including a first thickening agent and a second thickening agent in the first negative electrode slurry and the second negative electrode slurry, respectively.

When the first negative electrode slurry satisfies (condition A) and/or (condition B), the specific surface area of the particles included in the first negative electrode slurry can be increased, thereby directly increasing the interfacial adhesion between the first negative electrode active layer formed from the first negative electrode slurry and the negative electrode current collector.

In addition, the first negative electrode slurry and the second negative electrode slurry may be implemented such that the room temperature viscosity of the first negative electrode slurry is higher than the room temperature viscosity of the second negative electrode slurry by satisfying one or more of the above three conditions. The high room temperature viscosity may be such that the crystal surface (002) of the carbon-based negative electrode active material is aligned to have a slope lower than 90° with respect to the surface of the negative electrode current collector when orienting the carbon-based negative electrode active material using a magnetic field, thereby securing a short lithium transport path of the formed negative electrode active layer and preventing the adhesion of the negative electrode current collector and the first negative electrode active layer from being decreased.

(Condition A)

The first negative electrode slurry and the second negative electrode slurry may differ in the shape and/or average particle diameter($D_{50}$) of the first carbon-based negative electrode active material and the second carbon-based negative electrode active material included in each negative electrode slurry.

Specifically, the first negative electrode slurry may comprise a first carbon-based negative electrode active material having a relatively smaller average particle diameter ($D_{50}$) than the second carbon-based negative electrode active material, and thus may have a higher room temperature viscosity than the second negative electrode slurry.

Specifically, the average particle diameter ($D_1$) of the first carbon-based negative electrode active material may be in the range of less than 5 $\mu$m. For example, the average particle diameter ($D_1$) of the first carbon-based negative electrode active material may be in the range of 0.1$\mu$m to 4.9$\mu$m; 0.5$\mu$m to 4.9$\mu$m; 0.5$\mu$m to 4.5$\mu$m; 0.5$\mu$m to 4.0$\mu$m; 0.5$\mu$m to 3.5$\mu$m; 0.5$\mu$m to 3.0$\mu$m; 0.5$\mu$m to 2.5$\mu$m; 1.0$\mu$m to 4.6$\mu$m; 1.5$\mu$m to 4.9$\mu$m; 2.0$\mu$m to 4.9$\mu$m; 2.5$\mu$m to 4.9$\mu$m; 0.8$\mu$m to 1.5$\mu$m; 2.5$\mu$m to 3.5$\mu$m; 2.7$\mu$m to 4.6$\mu$m; 3.5$\mu$m to 4.9$\mu$m; or 4.1$\mu$m to 4.9$\mu$m.

Since the first carbon-based negative electrode active material is a primary particle having an average particle diameter ($D_1$) of less than 5 $\mu$m, the specific surface area can be significantly increased according to the small particle diameter, and thus the contact area between the carbon-based negative electrode active material of the first negative electrode slurry and the surface of the negative electrode current collector can be increased to further solidify the adhesion between the negative electrode current collector and the first negative electrode active layer. However, when the average particle diameter ($D_1$) of the first carbon-based negative electrode active material is lower than the lower limit value of the range described above, a large amount of binder is needed due to an increase in the number of particles per unit volume, and thus the electrical properties of the negative electrode active layer including the same may be decreased. In addition, when the average particle diameter ($D_1$) of the first carbon-based negative electrode active material is higher than the upper limit value of the range described above, the specific surface area of the first carbon-based negative electrode active material is significantly reduced, and thus the effect of improving the adhesion between the negative electrode current collector and the first negative electrode active layer may be minimal.

The ratio ($D_2/D_1$) of the average particle diameter ($D_2$) of the second carbon-based negative electrode active material to the average particle diameter ($D_1$) of the first carbon-based negative electrode active material may be 2.0 or more, and more specifically, the ratio ($D_2/D_1$) may be in the range of 2.0 to 15; 2.0 to 13; 2.0 to 11; 2.0 to 9.0; 2.0 to 7.0; 2.0 to 6.0; 2.0 to 5.0; 3.0 to 8.0; 3.0 to 7.0; 3.0 to 4.5; 4.0 to 7.0; 5.0 to 7.0; 4.0 to 10; 4.0 to 9.0; 6.0 to 11; 8.0 to 14; 9.0 to 13; or 3.1 to 5.5.

In addition, the first carbon-based negative electrode active material in the first negative electrode slurry may have a sphericity of 0.9 or more, and the second carbon-based negative electrode active material in the second negative electrode slurry may have a sphericity of less than 0.9.

For example, the first carbon-based negative electrode active material may have a sphericity in the range of 0.90 to 1.00; 0.90 to 0.99; 0.92 to 0.98; 0.95 to 0.99; 0.92 to 0.97; 0.95 to 0.98; or greater than 0.90 and less than 1.0. In addition, the second carbon-based negative electrode active material may have a sphericity in the range of 0.10 to 0.75; 0.25 to 0.75; 0.25 to 0.70; 0.25 to 0.60; 0.25 to 0.50; 0.25 to 0.40; 0.40 to 0.65; 0.50 to 0.70; 0.50 to 0.65; 0.60 to 0.75; 0.20 to 0.35; 0.10 to 0.40; 0.40 to 0.50; or 0.2 or more and less than 0.7.

The present disclosure may refer to "sphericity" as the ratio between the shortest diameter (short diameter) and the longest diameter (long diameter) of any diameter through the center of a particle in a two-dimensional projection of a carbon-based negative electrode active material. When the sphericity is 1, the particle may have a spherical shape. The sphericity may be determined by measuring it with a particle shape analyzer, or by measuring the shape of the particle using a scanning electron microscope (SEM), energy dispersive spectrometer, or the like, and then analyzing the measured results.

When the first negative electrode slurry and the second negative electrode slurry satisfy (condition A), they may have a room temperature viscosity in the range of 7,000 mPa·s or more at 25°C. Specifically, they may have a room temperature viscosity in a range of 7,000 mPa·s to 20,000 mPa·s; 7,000 mPa·s to 18,000 mPa·s; 7,000 mPa·s to 16,000 mPa·s; 7,000 mPa·s to 13,000 mPa·s; 7,000 mPa·s to 10,000 mPa·s; 7,000 mPa·s to 9,000 mPa·s; 8,000 mPa·s to 10,000 mPa·s; 9,000 mPa·s to 11,000 mPa·s; 7,500 mPa·s to 8,500 mPa·s; 11,000 mPa·s to 20,000 mPa·s; 12,000 mPa·s to 19,000 mPa·s; 12,500 mPa·s to 18,500 mPa·s; 14,000 mPa·s to 18,000 mPa·s; 15,000 mPa·s to 17,500 mPa·s; or 7,000 mPa·s to 7,500 mPa·s.

The second negative electrode slurry may have a room temperature viscosity in the range of less than 7,000 mPa·s at 25°C, and specifically, may have a room temperature viscosity in the range of 3,000 mPa·s to 6,900 mPa·s; 3,000 mPa·s to 5,000 mPa·s; 4,000 mPa·s to 6,000 mPa·s; 5,000 mPa·s to 6,500 mPa·s; 3,000 mPa·s to 3,500 mPa·s; 6,100 mPa·s to 6,900 mPa·s; or 4,500 mPa·s to 5,900 mPa·s.

(Condition B)

In addition, the first negative electrode slurry may comprise a carbon structure having a predetermined size by satisfying (condition B). In this case, the carbon structure has an average size at the nanometer (nm) level and refers to a material in which a main component is composed of carbon atoms (C).

The carbon structure may include one or more types of carbon nanotubes, carbon nanofilaments, nanofibers, fullerene, graphene, or graphite having an average size at the nanometer (nm) level.

For example, the carbon structures may include carbon nanotubes comprising one or more types of single-walled carbon nanotubes (S.W.CNT) or multi-walled carbon nanotubes (M.W.CNT). The carbon nanotubes may have a size at the nanometer (nm) level, which results in strong interactions between particles, thereby significantly increasing the viscosity of the first negative electrode slurry including them. In addition, the carbon nanotubes may have a linear structure and form a network of inter-carbon nanotubes in the first negative electrode active layer, thereby implementing a high electrical conductivity.

The carbon structure may have an average size in the range of 5 nm to 900 nm, more specifically 5 nm to 750 nm; 5 nm to 500 nm; 5 nm to 250 nm; 5 nm to 100 nm; 50 nm to 200 nm; 50 nm to 400 nm; 100 nm to 500 nm; 100 nm to 250 nm; 250 nm to 500 nm; 300 nm to 700 nm; 500 nm to 900 nm 700 nm to 900 nm; 600 nm to 800 nm; 150 nm to 300 nm; 10 nm to 90 nm; 50 nm to 90 nm; 50 nm to 150 nm; 110 nm to 390 nm; or 310 nm to 490 nm.

The carbon structure may be applied to the first negative electrode slurry in a predetermined content range. Specifically, the carbon structure may be included in a range from 0.001 wt.% to 10 wt.% based on the solid content of the first negative electrode slurry. More specifically, the carbon structure may comprise in the range of 0.001 wt.% to 9 wt.%; 0.001 wt.% to 7 wt.%; 0.001 wt.% to 5 wt.%; 0.001 wt.% to 3 wt.%; 0.001 wt.% to 1 wt.%; 0.001 wt.% to 0.5 wt.%; 0.01 wt.% to 0.5 wt.%; 0. 1 wt.% to 2 wt.%; 1 wt.% to 10 wt.%; 1 wt.% to 8 wt.%; 1 wt.% to 6 wt.%; 1 wt.% to 5 wt.%; 1 wt.% to 3 wt.%; 3 wt.% to 8 wt.%; 6 wt.% to 9 wt.%; 5 wt.% to 8 wt.%; 2 wt.% to 4 wt.%; or 1.5 wt.% to 4.5 wt.%. The content of the carbon structure may be adjusted according to the type and average size applied to the first negative electrode slurry.

For example, the first negative electrode slurry may include single-walled carbon nanotubes (S.W.CNT) as a carbon structure in the range of 0.01 wt.% to 0.9 wt.% with respect to the solid content of the first negative electrode slurry.

In addition, the first negative electrode slurry may include multi-walled carbon nanotubes (M.W.CNT) as a carbon structure in the range of 1 wt.% to 8 wt.% of the solid content of the first negative electrode slurry.

When the first negative electrode slurry satisfies (condition B), it may have a relatively higher viscosity at room temperature than the second negative electrode slurry. Specifically, the first negative electrode slurry may have a viscosity in the range of 11,000 mPa·s or more at room temperature. For example, the first negative electrode slurry may have a viscosity in the range of 11,000 mPa·s to 25,000 mPa·s; 11,000 mPa·s to 20,000 mPa·s; 17,000 mPa·s to 20,000 mPa·s; 11,000 mPa·s to 18,000 mPa·s; 11,000 mPa·s to 16,000 mPa·s; 11,000 mPa·s to 15,000 mPa·s; 13,000 mPa·s to 25,000 mPa·s; 15,000 mPa·s to 25,000 mPa·s; 17,000 mPa·s to 25,000 mPa·s; 20,000 mPa·s to 25,000 mPa·s; 13,000 mPa·s to 19,000 mPa·s; 14,000 mPa·s to 17,000 mPa·s; 16,000 mPa·s to 19,000 mPa·s; or 15,000 mPa·s to 18,000 mPa·s.

The second negative electrode slurry may have a viscosity in the range of less than 10,000 mPa·s at 25°C. For example, the second negative electrode slurry may have a viscosity in the range of 3,000 mPa·s to 9,000 mPa·s; 3,000 mPa·s to 8,000 mPa·s; 3,000 mPa·s to 7,000 mPa·s; 5,000 mPa·s to 7,000 mPa·s; 4,000 mPa·s to 6,500 mPa·s; 5,000 mPa·s to 6,500 mPa·s; 3,000 mPa·s to 5,500 mPa·s; 5,500 mPa·s to 6,500 mPa·s; or 5,500 mPa·s to 6,900 mPa·s at 25°C.

(Condition C)

In addition, the first negative electrode slurry and the second negative electrode slurry each comprise a first thickening agent and a second thickening agent by satisfying (condition C). The present disclosure includes the first thickening agent and the second thickening agent in the same content ratio based on the solid content of the negative electrode slurry (in other words, the total weight of the negative electrode active layer) to constitute each negative electrode active layer, but the viscosity of the first negative electrode slurry can be implemented higher than the viscosity of the second negative electrode slurry by making the concentration of the first thickening agent solution applied to the first negative electrode slurry higher than the concentration of the second thickening agent solution applied to the second negative electrode slurry.

The first thickening agent and the second thickening agent may be those conventionally applied in the art to control the viscosity of an electrode slurry. Specifically, the first thickening agent and the second thickening agent may each comprise one or more types of carboxymethylcellulose (CMC), polyvinyl alcohol (PVA), polyvinyl butyral (PVB), polyN-vinyl acetamide (PNVA), styrene-butadiene rubber (SBR), acrylic resin, or fluorine-based resin.

The first thickening agent and the second thickening agent may be included from 0.5 wt.% to 3 wt.% based on the solid content of the first negative electrode slurry and the second negative electrode slurry, respectively, and specifically may be included from 0.5 wt.% to 2 wt.%; 0.5 wt.% to 1 wt.%; 1 wt.% to 3 wt.%; 1 wt.% to 2 wt.%; 1.5 wt.% to 3 wt.%; 0.5 wt.% to 1.9 wt.%; or 1.1 wt.% to 1.9 wt.%.

For example, each of the first thickening agent and the second thickening agent may be carboxymethylcellulose (CMC) and may be included at 1.2 wt.% to 1.7 wt.% based on the solid content of the respective negative electrode slurry.

The first thickening agent and the second thickening agent may be applied to the negative electrode slurry in a solution state during the preparation of each negative electrode slurry. In this case, each solution including the first thickening agent and the second thickening agent includes the thickening agent in the same weight ratio with respect to the total weight of the solid content of the corresponding negative electrode slurry to which they are applied, but the concentration may be adjusted differently.

For example, the concentration of the solution including the second thickening agent may be in the range of 0.5 wt.% to 1.5 wt.% based on the total weight of the solution, specifically in the range of 0.5 wt.% to 1.1 wt.%; 0.5 wt.% to 0.9 wt.%; 1.0 wt.% to 1.5 wt.%; or 0.8 wt.% to 1.2 wt.%.

In addition, the concentration of the solution including the first thickening agent may have a concentration ratio in the range of 150% to 250% based on the concentration of the solution including the second thickening agent, specifically, it may have a concentration ratio in the range of 150% to 230%; 150% to 210%; 150% to 190%; 180% to 250%; 210% to 250%; 170% to 230%; or 190% to 210% based on the concentration of the solution including the second thickening agent.

The present disclosure can adjust the concentration of the solution included each of the first thickening agent and the second thickening agent to satisfy the above-described range, thereby preventing the respective thickening agent from not being uniformly dispersed in the corresponding negative electrode slurry due to a high concentration exceeding the upper limit value of the above range. In addition, it may prevent the solid content of the negative electrode slurry from being degraded due to a concentration below the lower limit value of the above range.

The first negative electrode slurry and the second negative electrode slurry can be implemented such that the room temperature viscosity of the first negative electrode slurry is relatively higher than the room temperature viscosity of the second negative electrode slurry while applying the same content ratio by satisfying (condition C).

Specifically, the first negative electrode slurry may have a room temperature viscosity in the range of 7,000 mPa·s or more at 25°C. For example, the first negative electrode slurry may have a room temperature viscosity in the range of 7,000 mPa·s to 20,000 mPa·s; 7,000 mPa·s to 19,000 mPa·s; 7,000 mPa·s to 15,000 mPa·s; 7,000 mPa·s to 13,000 mPa·s; 7,000 mPa·s to 11,000 mPa·s; 11,000 mPa·s to 19,000 mPa·s; 13,000 mPa·s to 18,000 mPa·s; 15,000 mPa·s to 18,000 mPa·s; 7,000 mPa·s to 9,000 mPa·s; 8,000 mPa·s to 10,000 mPa·s; 9,000 mPa·s to 11,000 mPa·s; 7,000 mPa·s to 8,500 mPa·s; or 7,100 mPa·s to 7,900 mPa·s at 25°C.

The second negative electrode slurry may have a room temperature viscosity in the range of less than 5,000 mPa·s at 25°C. For example, the second negative electrode slurry may have a room temperature viscosity in the range of 1,000 mPa·s to 4,900 mPa·s; 1,500 mPa·s to 4,500 mPa·s; 2,500 mPa·s to 4,000 mPa·s; 3,500 mPa·s to 4,500 mPa·s; 4,000 mPa·s to 4,500 mPa·s; 3,100 mPa·s to 3,900 mPa·s; or 3,100 mPa·s to 4,500 mPa·s at 25°C.

Meanwhile, the first negative electrode slurry and the second negative electrode slurry may each have a solid content in the range of 35% to 80%, and more specifically, may have a solid content in the range of 35% to 70%; 35% to 60%; 35% to 50%; 40% to 60%; 45% to 70%; 60% to 75%; 45% to 65%; 45% to 55%; or 50% to 60%.

In addition, the step (S3) of applying a magnetic field to the negative electrode slurry may refer to a process of controlling the crystal surface characteristics of the carbon-based negative electrode active material contained in the negative electrode slurry. Specifically, in the step (S3), by applying a magnetic field to a surface of the second negative electrode slurry coated on the negative electrode current collector, the ab-axis crystal surface of each carbon-based negative electrode active material included in the second negative electrode slurry and the first negative electrode slurry located in a lower portion thereof may be aligned to have a high angle with respect to the negative electrode current collector.

The magnetic field application may be applied by magnetic portions disposed in an upper portion and a lower portion of the negative electrode current collector, which is moved with a negative electrode slurry coated on its surface. The polarities of the magnetic portions such disposed in the upper portion and the lower portion may be different from each other.

The orientation index (O.I.) of the carbon-based negative electrode active material contained in each negative electrode slurry may be adjusted by the intensity of the applied magnetic field, the application time, or the like, and

EP 4 712 157 A1

accordingly, the step of applying the magnetic field may be performed under a predetermined magnetic field intensity condition.

Specifically, in the step (S3) of applying the magnetic field, a magnetic field in the range of 10,000 G (Gauss) or less may be applied. For example, in the step (S3) of applying the magnetic field, a magnetic field may be applied with an intensity in the range of 3,000 G to 10,000 G; 5,000 G to 10,000 G; 7,000 G to 10,000 G; 3,000 G to 8,000 G; 5,000 G to 8,000 G; 5,500 G to 6,500 G; 1,000 G to 7,000 G; 2,000 G to 6,000 G; 1,500 G to 5,000 G; 1,500 G to 4,500 G; 4,000 G to 7,000 G; 2,000 G to 4,000 G; 2,500 G to 3,500 G; 3,000 G to 6,500 G; or 2,700 G to 3,300 G.

In addition, the step (S3) of applying the magnetic field may be performed for a period of 1 second to 60 seconds, and specifically, may be performed for a period of 1 second to 45 seconds; 1 second to 30 seconds; 10 seconds to 30 seconds; 30 seconds to 50 seconds; 1 second to 15 seconds; 1 second to 10 seconds; 5 seconds to 20 seconds; 10 seconds to 20 seconds; 11 seconds to 18 seconds; 1 second to 9 seconds; 1 second to 5 seconds; 7 seconds to 13 seconds; or 6 seconds to 11 seconds.

For example, in the step of applying the magnetic field, a magnetic field in the range of $6,000\pm50$ G may be applied to the negative electrode slurry for 3 seconds to 7 seconds; or 8 seconds to 12 seconds.

Further, the step (S3) of applying the magnetic field may be performed by magnetic portions introduced into the upper portion and the lower portion of the applied negative electrode slurry, as described above, but the size of the magnetic portions may be adjusted to be larger than the size of the negative electrode slurry so that the magnetic field applied to the negative electrode slurry may be uniformly applied to the entire surface of the negative electrode slurry. For example, the magnetic portion may have a length ratio in the range of 105% to 200% based on a length in the width direction of the negative electrode slurry, and specifically may have a length ratio in the range of 110% to 180%; 110% to 160%; 110% to 140%; 110% to 130%; 130% to 150%; or 105% to 120% based on a length in the width direction of the negative electrode slurry.

The present disclosure may be implemented to make the orientation index (O.I.) of the carbon-based negative electrode active material contained in the negative electrode slurry uniformly satisfy a predetermined range by controlling the magnetic field intensity, the application time, and/or the magnetic portion size as described above in the step (S3) of applying the magnetic field.

When a magnetic field is applied to the first negative electrode slurry and the second negative electrode slurry through the present step (S3), the first and second carbon-based negative electrode active material included in each negative electrode slurry may be oriented such that each crystal surface has a predetermined slope with respect to the negative electrode current collector.

At this time, the first negative electrode slurry and the second negative electrode slurry may satisfy one or more of (condition A) to (condition C) described above, such that the room temperature viscosity of the first negative electrode slurry may be controlled to be relatively larger than the room temperature viscosity of the second negative electrode slurry. Thus, when applying the magnetic field to each negative electrode slurry in the present step (S3), each carbon-based negative electrode active material included in each negative electrode slurry may have a different degree of orientation of its crystal surface with respect to the negative electrode current collector. This can be confirmed by measuring X-ray diffraction after drying the corresponding negative electrode slurry.

Specifically, when the room temperature viscosity of the first negative electrode slurry is high, the movement of the first carbon-based negative electrode active material is restricted during magnetic field application, making it difficult to align the crystal surface of the first carbon-based negative electrode active material. Therefore, the present disclosure enables the first negative electrode slurry to have a higher room temperature viscosity than the second negative electrode slurry, whereby after applying magnetic field to the negative electrode slurry and drying, when measuring X-ray diffraction for each negative electrode active layer, the orientation index (O.I$_{1st}$) of the first carbon-based negative electrode active material can be significantly implemented to be 200% or more based on the orientation index (O.I$_{2nd}$) of the second carbon-based negative electrode active material.

For example, the second negative electrode active layer formed from the second negative electrode slurry may have an orientation index (O.I$_{2nd}$) of the second carbon-based negative electrode active material in the range of 0.5 to 6, and specifically in the range of 1 to 5; 1 to 3; 1.5 to 6; 3 to 6; 4.5 to 6; 2.5 to 5; 4 to 6; 2.5 to 4.5; 2.1 to 5.0; 2.1 to 4.0; 2.3 to 4.5; 2.4 to 5.5; 1.5 to 2.9; 1.6 to 2.9; 2.1 to 3.3; 1.6 to 3.0; 3 to 4.5; 3 to 5.5; 4.5 to 5.5; 4.1 to 4.9; 4.9 to 5.6; 5 to 6; or 5.5 to 6.

In addition, the orientation index (O.I$_{1st}$) of the first negative electrode active layer formed from the first negative electrode slurry may have a ratio in the range of 200% to 900% based on the orientation index (O.I$_{2nd}$) of the second negative electrode active layer formed from the second negative electrode slurry. Specifically, the orientation index (O.I$_{1st}$) of the first negative electrode active layer may have a ratio in the range of 200% to 900%; 200% to 700%; 200% to 500%; 200% to 400%; 210% to 290%; 250% to 400%; 370% to 590%; 300% to 500%; 400% to 830%; 400% to 700%; 400% to 600%; 400% to 550%; 450% to 750%; 210% to 450%; 600% to 800%; 600% to 900%; 410% to 580%; 410% to 500%; 410% to 490%; 510% to 580%; 420% to 450%; 440% to 500%; 460% to 550%; or 510% to 560% based on the orientation index (O.I$_{2nd}$) of the second negative electrode active layer.

Furthermore, the step (S4) of forming the negative electrode active layer may include a process (S4-1) of drying the negative electrode slurry to which the magnetic field is applied.

At this time, the step (S4-1) of drying the negative electrode slurry may be applied without particular limitation as long as it is a method capable of maintaining the orientation of the carbon-based negative electrode active material contained in each of the first negative electrode slurry and the second negative electrode slurry. For example, in the drying step (S4-1), the negative electrode slurry may be dried by applying thermal energy to the negative electrode slurry using a hot air dryer, vacuum oven, etc.

The step (S4) of forming the negative electrode active layer may further include a step (S4-2) of rolling the negative electrode active layer formed by drying the negative electrode slurry. The rolling step (S4-2) is a step of increasing the density of the entire negative electrode active layer by applying pressure to the surface of the formed negative electrode active layer (specifically, the surface of the second negative electrode active layer) using a roll press or the like. At this time, the rolling may be performed under temperature conditions higher than room temperature.

For example, the rolling may be performed at a temperature in the range of 50°C to 100°C, specifically in the range of 60°C to 100°C; 75°C to 100°C; 85°C to 100°C; 50°C to 90°C; 60°C to 80°C; or 65°C to 90°C.

Also, the rolling may be performed at a rolling speed in the range of 2 m/s to 7 m/s, and specifically at a rolling speed in the range of 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s.

The rolling may be performed under pressure conditions in the range of 50 MPa to 200 MPa, and specifically under pressure conditions in the range of 50 MPa to 150 MPa; 50 MPa to 100 MPa; 100 MPa to 200 MPa; 150 MPa to 200 MPa; or 80 MPa to 140 MPa.

The present disclosure can increase the energy density of the negative electrode while minimizing changes in the orientation index of each carbon-based negative electrode active material contained in the first negative electrode active layer and the second negative electrode active layer formed by performing rolling under the above temperature, speed, and/or pressure conditions.

The method of manufacturing a negative electrode according to the present disclosure can easily control the orientation index (O.I) of each negative electrode active layer to satisfy a predetermined range by having the above-described configuration. Therefore, the negative electrode manufactured by the above manufacturing method has excellent lifespan characteristics, and a lithium secondary battery including the same not only has excellent output characteristics but also has the advantage of being capable of charging in a short time even at 1C-rate.

Lithium Secondary Battery

Further, the present disclosure provides a lithium secondary battery comprises,

> an electrode assembly including a positive electrode, a negative electrode of the present disclosure, and a separator disposed between the positive electrode and the negative electrode; and
> an electrolyte composition with which the electrode assembly is impregnated.

The lithium secondary battery according to the present disclosure includes an electrode assembly having a structure in which a plurality of positive electrodes and a plurality of negative electrodes are alternately disposed, and a separator is positioned therebetween. The lithium secondary battery, having the negative electrodes of the present disclosure as described above, not only has excellent lifespan characteristics and output characteristics, but also can be charged in a short time even at 1C-rate, and thus can be usefully used as a power source for medium and large devices such as electric vehicles.

In this case, the negative electrode has the same configuration as the above-described configuration, and thus specific description is omitted.

In addition, the positive electrode comprises a positive electrode active material layer including a positive electrode active material on at least one side of the positive electrode current collector, and the positive electrode active layer may selectively further include conductive materials, binders, other additives, and the like as needed.

The positive electrode active material may comprise one or more of the lithium metal oxides represented by the following chemical formula 1 or chemical formula 2, which are electrochemically reactive materials capable of reversibly intercalating and deintercalating lithium ions:

[Chemical formula 1] $\quad\quad Li_x[Ni_yCo_zMn_wM^1_v]O_2$

[Chemical formula 2] $\quad\quad LiM^2_pMn_qP_rO_4$

In the above chemical formula 1 and chemical formula 2,

wherein $M^1$ is an element of one or more types of W, Cu, Fe, V, Cr, Ti, Zr, Zn, Al, In, Ta, Y, La, Sr, Ga, Sc, Gd, Sm, Ca, Ce, Nb, Mg, B, or Mo,

wherein x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,

wherein $M^2$ is Ni, Co, or Fe,

wherein p is $0.05 \leq p \leq 1.0$,

wherein q is 2-p, and

wherein r is 0 or 1.

The lithium metal oxide represented by the above chemical formula 1 is a metal oxide comprising nickel (Ni), cobalt (Co), and manganese (Mn) together with lithium, which has the advantage of having a high content of nickel (Ni) to stably supply electricity of high capacity and/or high voltage.

The lithium metal oxide represented by the above chemical formula 1 includes $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$ and the like, which may be used alone or in combination.

In addition, the lithium metal oxide represented by the above chemical formula 2 is an iron phosphate compound having an olivine structure, which has the most excellent structural stability, and thus has excellent lifespan characteristics, and has advantages in all safety aspects including overcharge and overdischarge.

The lithium metal oxide represented by the above chemical formula 2 may include $LiNi_{0.7}Mn_{1.3}O_4$; $LiNi_{0.5}Mn_{1.5}O_4$; $LiNi_{0.3}Mn_{1.7}O_4$, and the like, which may be used alone or in combination.

In addition, the positive electrode active material may be included at least 85 wt.%, based on the total weight of the positive electrode active material layer, and specifically may be included at least 90 wt.%, at least 93 wt.%, or at least 95 wt.%.

Moreover, the positive electrode active material layer may further comprise conductive materials, binders, other additives, and the like along with the positive electrode active material.

In this case, the conductive material is used to improve the electrical performance of the positive electrode, and may be any of those conventionally used in the art, but may specifically include one or more types of natural graphite, artificial graphite, carbon black, acetylene black, channel black, furnace black, lamp black, thermal black, graphene, or carbon nanotubes.

In addition, the conductive material may be included in an amount of 0.1 wt.% to 5 wt.% based on the total weight of the positive electrode active layer, and specifically may be included in an amount of 0.1 wt.% to 4 wt.%; 2 wt.% to 4 wt.%; 1.5 wt.% to 5 wt.%; 1 wt.% to 3 wt.%; 0.1 wt.% to 2 wt.%; or 0.1 wt.% to 1 wt.%.

Also, the binder performs the role of binding the positive electrode active material, positive electrode additive, and conductive material to each other, and may be used without particular limitation as long as it has such function. Specifically, the binder may include one or more types of resin selected from polyvinylidene fluoride-hexafluoropropylene copolymer (PVdF-co-HFP), polyvinylidene fluoride (PVdF), polyacrylonitrile, polymethylmethacrylate, or copolymers thereof. As one example, the binder may include polyvinylidene fluoride.

In addition, the binder may be included in an amount of 1 wt.% to 10 wt.% based on the total weight of the positive electrode active layer, and specifically may be included in an amount of 2 wt.% to 8 wt.%; or 1 wt.% to 5 wt.%.

While the average thickness of the positive electrode active layer is not particularly limited, specifically, it may be in the range of 50 $\mu$m to 300 $\mu$m, and more specifically, may be in the range of 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

In addition, in the positive electrode, a positive electrode current collector having a high conductivity without causing chemical changes in the battery may be used. For example, the positive electrode current collector may use a foil or film comprising stainless steel, aluminum, nickel, titanium, sintered carbon, etc., and in the case of including aluminum or stainless steel, the foil or film may be surface treated with carbon, nickel, titanium, silver, etc. In addition, the average thickness of the current collector may be appropriately applied in the range of 3 $\mu$m to 500 $\mu$m considering the conductivity and total thickness of the manufactured positive electrode.

The separator is an insulating thin film having high ion permeability and mechanical strength, and is not particularly limited as long as it is conventionally used in the art. Specifically, the separator may use comprising one or more types of polymer selected from chemically resistant and hydrophobic polypropylene, polyethylene, or polyethylene-propylene copolymer. The separator may have a form of porous polymer substrate such as sheet or nonwoven fabric comprising the above-mentioned polymer, and in some cases, may have a form of composite separator in which organic or inorganic particles are coated on the porous polymer substrate by an organic binder. In addition, the separator may have an average diameter of pores from 0.01 $\mu$m to 10 $\mu$m, and an average thickness of 5 $\mu$m to 300 $\mu$m.

Meanwhile, the lithium secondary battery according to the present disclosure is not particularly limited, but may be a secondary battery comprising a stack-type; zigzag-type; or zigzag-stack type electrode assembly.

For example, the lithium secondary battery according to the present disclosure may be a pouch-type secondary battery or a prismatic secondary battery. The pouch-type secondary battery and/or prismatic secondary battery have the advantage of high utilization in terms of energy density as they can pack unit cells of the secondary battery at high density within a limited space.

In the lithium secondary battery, the electrolyte composition may be used without particular limitation as long as it is conventionally applied to lithium secondary batteries.

Specifically, the electrolyte composition may include non-aqueous organic solvent, lithium salt, and electrolyte additives, etc.

The non-aqueous organic solvent may be applied without particular limitation as long as it is used for non-aqueous electrolytes in the art. For example, the non-aqueous organic solvent may use aprotic organic solvents such as N-methyl-2-pyrrolidone, ethylene carbonate (EC), propylene carbonate (PC), propylene carbonate, butylene carbonate, dimethyl carbonate (DMC), diethyl carbonate (DEC), gamma-butyrolactone, 1,2-dimethoxy ethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate (MP), ethyl propionate (EP), or propyl propionate (PP).

Also, the non-aqueous organic solvent used in the present disclosure may be used alone as one type, or two or more types may be mixed in any combination or ratio according to use. Among these, particularly propylene carbonate, ethylene carbonate, fluoroethylene carbonate, diethyl carbonate, dimethyl carbonate, ethylmethyl carbonate, etc. are preferably mixed from the viewpoint of electrochemical stability to oxidation-reduction and chemical stability regarding reactions with heat or solute.

The lithium salt can be applied without particular limitation to any non-aqueous electrolyte known in the art. Specifically, the lithium salt may comprise one or more types of LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, (CF$_3$SO$_2$)$_2$NLi, or (FSO$_2$)$_2$NLi.

The lower limit of the range of appropriate concentrations for appropriately using the lithium salt is 0.5mol/L or more, more specifically 0.7mol/L or more, more specifically 0.9mol/L or more, and the upper limit is 2.5mol/L or less, more specifically 2.0mol/L or less, more specifically 1.5mol/L or less. When the concentration of the lithium salt is lower than 0.5mol/L, there is a possibility that the cycle characteristics, output characteristics of the non-aqueous electrolyte battery may be degraded by decreasing the ionic conductivity. In addition, when the concentration of the lithium salt exceeds 2.5mol/L, the viscosity of the electrolyte for the non-aqueous electrolyte battery increases, which again may decrease the ionic conductivity and may decrease the cycle characteristics and output characteristics of the non-aqueous electrolyte battery.

Also, when a large amount of lithium salt is dissolved in a non-aqueous organic solvent at once, the temperature of the electrolyte may rise due to the heat of dissolution of the lithium salt. When the temperature of the non-aqueous organic solvent rises significantly due to such heat of dissolution of the lithium salt, in the case of fluorine-containing lithium salt, decomposition may be promoted, raising concerns about the generation of hydrogen fluoride (HF). Hydrogen fluoride (HF) is undesirable as it causes deterioration of battery performance. Therefore, while the temperature when dissolving the lithium salt in the non-aqueous organic solvent is not particularly limited, it may be controlled in the range of -20°C to 80°C, and specifically may be controlled in the range of 0°C to 60°C.

Furthermore, the electrolyte additive may be included as an additional auxiliary component to improve the physical properties of the electrolyte composition. Any electrolyte additive commonly used in the non-aqueous electrolyte of the present disclosure may be added in any ratio. Specifically, compounds having overcharge prevention effect, negative electrode film formation effect, and positive electrode protection effect can be mentioned, such as cyclohexylbenzene, biphenyl, t-butylbenzene, carbonate, vinylene carbonate, difluoroanisole, fluoroethylene carbonate, propane sultone, succinonitrile, or dimethyl vinylene carbonate. In addition, it is also possible to use electrolytes for non-aqueous electrolyte batteries by solidifying them with gelling agents or cross-linking polymers, such as in the case when used in non-aqueous electrolyte batteries called lithium polymer batteries.

The lithium secondary battery according to the present disclosure has the advantage of having the above-described configuration, which not only has excellent lifespan characteristics and output characteristics of the battery but also can be charged in a short time even at 1C-rate.

Hereinafter, the present disclosure will be described in more detail by examples and comparative examples.

However, the following examples and comparative examples are merely illustrative of the present disclosure, and the present disclosure is not limited to the following examples and comparative examples.

EXAMPLES

**Measurement methods**

<Room temperature viscosity>

The viscosity was measured using a Type B rotational viscometer at a shear rate of 12 rpm at 25°C.

For each negative electrode prepared in examples or comparative examples, X-ray diffraction spectroscopy (XRD) for the first negative electrode active layer and the second negative electrode active layer was performed to measure spectra. In the case of the first negative electrode active layer, after the X-ray diffraction spectroscopy (XRD) measurement of the second negative electrode active layer, the second negative electrode active layer was removed by exfoliation, and X-ray diffraction was measured on the exposed surface of the first negative electrode active layer. Moreover, the measurement conditions of X-ray diffraction (XRD) were as follows:

- Target: Cu (K$\alpha$ line) graphite monochromator.
- Slit: divergence slit = 1°, reception slit = 0.1 mm, scattering slit = 1°.
- Measurement area: (110) plane: 76.0°< 2$\theta$< 79.0° / (004) plane: 53.0°< 2$\theta$< 57.0°.

From the spectra measured under the above conditions, the average orientation index (O.I) of the carbon-based negative electrode active material contained in each negative electrode active layer was calculated using Formula 1:

$$[\text{Formula 1}]$$

$$O.I = I_{004}/I_{110}$$

wherein $I_{004}$ indicates the peak area value representing the (004) crystal surface in X-ray diffraction spectroscopy (XRD) analysis of the negative electrode active layer,

wherein $I_{110}$ indicates the peak area value representing the (110) crystal surface in X-ray diffraction spectroscopy (XRD) analysis of the negative electrode active layer.

<Adhesion between negative electrode current collector and negative electrode active layer>

Specimens were prepared by cutting each negative electrode prepared in the examples or comparative examples so that the transverse and longitudinal lengths were 20 mm and 70 mm, respectively. Using double-sided tape, the prepared specimens were attached to a glass plate, which was disposed so that the current collectors were facing the glass plate. The specimens fixed on the glass plate were fixed in a tensile tester, and then the negative electrode active layer of each negative electrode was pulled and detached at a speed of 100 mm/min at 25°C to form an angle of 90° with the negative electrode current collector. At this time, the peeling force measured in real time was defined as the interfacial adhesion between the negative electrode current collector and the negative electrode active layer.

<1C-rate charging time>

A positive electrode was manufactured by preparing $LiNi_{0.7}Co_{0.1}Mn_{0.1}Al_{0.1}O_2$ having a particle size of 5 $\mu$m as a positive electrode active material, mixing it with a carbon-based conductive material and polyvinylidene fluoride as a binder in N-methyl pyrrolidone (NMP) at a weight ratio of 94:3:3 to form a slurry, casting on an aluminum thin plate, drying it in a vacuum oven at 120°C, and then rolling.

A lithium secondary battery with a capacity of 1 Ah was assembled by interposing a separator composed of polypropylene with a thickness of 18 $\mu$m between the above-obtained positive electrode and each negative electrode manufactured in examples or comparative examples, inserting them into a case, and then injecting an electrolyte composition.

Each lithium secondary battery was activated by charging to 4.2 V under CC-CV conditions at a rate of 0.3C and discharging to 2.5 V under CC conditions at a rate of 0.3C at 25°C.

For each activated lithium secondary battery, the time required to reach 90% state of charge (SOC) was measured while performing charging by the constant current-constant voltage (CC-CV) method of charging at a temperature of 25°C. At this time, the charging was performed by conducting constant current (CC) charging at a current of 1.0C-rate until the voltage reached 4.2 V, followed by constant voltage (CV) charging maintaining 4.2 V until the current reached 0.005C-rate for cut-off. The measured charging time was defined as the rapid charging time at 1C-rate.

**Examples 1 to 9 and Comparative Examples 1 to 3: Manufacturing** of Negative **Electrode** I

Natural graphite and artificial graphite were prepared as carbon-based negative electrode active materials, and styrene-butadiene rubber (SBR) was prepared as a binder.

Then, the first negative electrode slurry was prepared by mixing 97.5 parts by weight of the first carbon-based negative electrode active material and 2.5 parts by weight of styrene-butadiene rubber (SBR) with water to obtain 50% solid content.

Also, the second negative electrode slurry was prepared by mixing 97.5 parts by weight of the second carbon-based negative electrode active material and 2.5 parts by weight of styrene-butadiene rubber (SBR) with water to obtain 50% solid content.

At this time, (1) type, (2) average particle diameter ($D_{50}$), and (3) sphericity of each carbon-based negative electrode active material were controlled as shown in Table 1.

When each negative electrode slurry was prepared, the first negative electrode slurry and the second negative electrode slurry were simultaneously cast on a copper thin plate (thickness: 10 $\mu$m) being transferred roll-to-roll (transfer speed: 5 m/min) using a die coater.

Permanent magnets having a length ratio of 110% to 120% based on the width direction length of the negative electrode slurry were placed on the upper portion of the coated negative electrode slurry and the lower portion of the negative electrode current collector, and a magnetic field was applied for 4 seconds to 6 seconds with a magnetic field intensity of 6,000$\pm$20 G. The negative electrode slurry to which the magnetic field was applied was hot-air dried to form a negative electrode in which the first negative electrode active layer and the second negative electrode active layer were sequentially stacked on the negative electrode current collector. The formed negative electrode active layer was rolled at 50$\pm$1°C under a pressure of 100 MPa to 150 MPa and a transfer speed of 3 m/s to manufacture a negative electrode (average thickness of the first negative electrode active layer and the second negative electrode active layer: 60$\pm$5 $\mu$m and 160$\pm$5 $\mu$m, respectively).

[Table 1]

| | Magnetic field application | First carbon-based negative electrode active material | | | Second carbon-based negative electrode active material | | | $D_2/D_1$ |
|---|---|---|---|---|---|---|---|---|
| | | Type | Average particle diameter ($D_1$) | Sphericity | Type | Average particle diameter ($D_1$) | Sphericity | |
| Example 1 | O | Artificial graphite | Approx. 1.5$\mu$m | 0.95 | Artificial graphite | Approx. 15$\mu$m | 0.45 | 10 |
| Example 2 | O | Artificial graphite | Approx. 3.0$\mu$m | 0.95 | Artificial graphite | Approx. 15$\mu$m | 0.45 | 5 |
| Example 3 | O | Artificial graphite | Approx. 4.5 $\mu$m | 0.95 | Artificial graphite | Approx. 15$\mu$m | 0.45 | 3.33 |
| Example 4 | O | Artificial graphite | Approx. 3.0$\mu$m | 0.95 | Artificial graphite | Approx. 12$\mu$m | 0.45 | 4 |
| Example 5 | O | Artificial graphite | Approx. 3.0$\mu$m | 0.95 | Artificial graphite | Approx. 20$\mu$m | 0.45 | 6.67 |
| Example 6 | O | Natural graphite | Approx. 3.0$\mu$m | 0.95 | Artificial graphite | Approx. 15$\mu$m | 0.45 | 5 |
| Example 7 | O | Natural graphite +artificial graphite (2:8 wt./wt.) | Approx. 3.0$\mu$m | 0.95 | Artificial graphite | Approx. 15$\mu$m | 0.45 | 5 |
| Example 8 | O | Artificial graphite | Approx. 3.0$\mu$m | 0.8 | Artificial graphite | Approx. 15$\mu$m | 0.45 | 5 |

(continued)

| | Magnetic field application | First carbon-based negative electrode active material | | | Second carbon-based negative electrode active material | | | $D_2/D_1$ |
|---|---|---|---|---|---|---|---|---|
| | | Type | Average particle diameter ($D_1$) | Sphericity | Type | Average particle diameter ($D_1$) | Sphericity | |
| Example 9 | O | Artificial graphite | Approx. 3.0μm | 0.95 | Artificial graphite | Approx. 15μm | 0.95 | 5 |
| Comparative Example 1 | O | Artificial graphite | Approx. 8.0μm | 0.95 | Artificial graphite | Approx. 11μm | 0.45 | 1.375 |
| Comparative Example 2 | O | Artificial graphite | Approx. 8.0μm | 0.95 | Artificial graphite | Approx. 15μm | 0.45 | 1.875 |
| Comparative Example 3 | X | Artificial graphite | Approx. 3.0μm | 0.95 | Artificial graphite | Approx. 15μm | 0.45 | 5 |

[Table 2]

| | Slurry viscosity (unit: mPa·s) | |
|---|---|---|
| | First negative electrode slurry | Second negative electrode slurry |
| Example 1 | 7,900 | 4,200 |
| Example 2 | 7,100 | 4,200 |
| Example 3 | 6,800 | 4,200 |
| Example 4 | 7,100 | 4,200 |
| Example 5 | 7,100 | 4,200 |
| Example 6 | 6,300 | 4,200 |
| Example 7 | 6,500 | 4,200 |
| Example 8 | 7,100 | 4,200 |
| Example 9 | 7,100 | 4,200 |
| Comparative Example 1 | 5,500 | 4,200 |
| Comparative Example 2 | 5,500 | 4,200 |
| Comparative Example 3 | 7,100 | 4,200 |

[Table 3]

| | Orientation index of first negative electrode active layer ($O.I_{1st}$) | Orientation index of second negative electrode active layer ($O.I_{2nd}$) | $O.I_{1st}/O.I_{2nd}*100$ |
|---|---|---|---|
| Example 1 | 13.5 | 2.5 | 540% |
| Example 2 | 12 | 2.5 | 480% |
| Example 3 | 11 | 2.5 | 440% |
| Example 4 | 12 | 2.8 | 430% |
| Example 5 | 12 | 2.2 | 550% |
| Example 6 | 16 | 2.5 | 640% |

(continued)

| | Orientation index of first negative electrode active layer $(O.I_{1st})$ | Orientation index of second negative electrode active layer $(O.I_{2nd})$ | $O.I_{1st}/O.I_{2nd}*100$ |
|---|---|---|---|
| Example 7 | 15 | 2.5 | 600% |
| Example 8 | 12 | 2.5 | 480% |
| Example 9 | 12 | 2.5 | 480% |
| Comparative Example 1 | 9 | 3.0 | 300% |
| Comparative Example 2 | 9 | 2.5 | 360% |
| Comparative Example 3 | 16 | 16 | 100% |

**Comparative Examples 4 to 6: Manufacturing of Negative Electrode II**

As carbon-based negative electrode active materials, artificial graphite I having an average particle diameter of approximately 3.0 $\mu$m and a sphericity of 0.95; artificial graphite II having an average particle diameter of approximately 15 $\mu$m and a sphericity of 0.45; and natural graphite I having an average particle diameter of approximately 3.0 $\mu$m and a sphericity of 0.95 were prepared respectively.

The negative electrode was manufactured in the same manner as in Example 2 except that a single-layer structure negative electrode active layer (average thickness: 220$\pm$10 $\mu$m) was formed by applying the prepared graphites as carbon-based negative electrode active materials as shown in Table 4 below.

In addition, the orientation index (O.I.) of the negative electrode active layer of each negative electrode manufactured by the same method as in Example 2 was calculated, and the results are shown in Table 4 below.

[Table 4]

| | Carbon-based negative electrode active material | Slurry viscosity (unit: mPa·s) | Orientation index (O.I) |
|---|---|---|---|
| Comparative Example 4 | Artificial graphite I | 7,100 | 18 |
| Comparative Example 5 | Artificial graphite II | 4,500 | 3.5 |
| Comparative Example 6 | Natural graphite I + artificial graphite II (2:8 wt./wt.) | 6,500 | 12 |

**Experimental Example 1.**

To evaluate the performance of the negative electrode according to the present disclosure, adhesion between the negative electrode current collector and negative electrode active layer, and charging time at 1C-rate were measured for each negative electrode manufactured in Examples 1 to 9 and Comparative Examples 1 to 6. The results are shown in Table 5 below.

[Table 5]

| Type of negative electrode | Adhesion between current collector and active layer | Charging time of secondary battery (SOC 90%) |
|---|---|---|
| Negative electrode manufactured in Example 1 | 36 gf/cm | 31 min |
| Negative electrode manufactured in Example 2 | 34 gf/cm | 29 min |
| Negative electrode manufactured in Example 3 | 31 gf/cm | 27 min |
| Negative electrode manufactured in Example 4 | 33 gf/cm | 31 min |
| Negative electrode manufactured in Example 5 | 34 gf/cm | 30 min |
| Negative electrode manufactured in Example 6 | 41 gf/cm | 36 min |
| Negative electrode manufactured in Example 7 | 35 gf/cm | 34 min |

(continued)

| Type of negative electrode | Adhesion between current collector and active layer | Charging time of secondary battery (SOC 90%) |
|---|---|---|
| Negative electrode manufactured in Example 8 | 17 gf/cm | 32 min |
| Negative electrode manufactured in Example 9 | 34 gf/cm | 37 min |
| Negative electrode manufactured in Comparative Example 1 | 21 gf/cm | 40 min |
| Negative electrode manufactured in Comparative Example 2 | 20 gf/cm | 39 min |
| Negative electrode manufactured in Comparative Example 3 | 33 gf/cm | 44 min |
| Negative electrode manufactured in Comparative Example 4 | 36 gf/cm | 43 min |
| Negative electrode manufactured in Comparative Example 5 | 11 gf/cm | 39 min |
| Negative electrode manufactured in Comparative Example 6 | 15 gf/cm | 50 min |

As shown in Table 5 above, the negative electrodes of Examples showed high adhesion of 30 gf/cm or more between the first negative electrode active layer and the negative electrode current collector. Also, secondary batteries including these negative electrodes reached 90% state of charge (SOC) within a short time of 35 minutes or less under standard constant current-constant voltage (CC-CV) charging conditions at 1C-rate.

In contrast, the negative electrodes of Comparative Examples showed low adhesion of 25 gf/cm or less between the first negative electrode active layer and the negative electrode current collector. However, the negative electrodes of Comparative Examples 3 and 4 showed adhesion of 30 gf/cm or more between the first negative electrode active layer and the negative electrode current collector. However, secondary batteries including these showed that it took 43 minutes or more to reach 90% state of charge (SOC).

This means that the adhesion between the negative electrode current collector and negative electrode active layer and charging rate under standard C-rate conditions can be improved by controlling the average particle diameter conditions of the first carbon-based negative electrode active material and the second carbon-based negative electrode active material contained in the first negative electrode active layer and the second negative electrode active layer, respectively, and the orientation index (O.I) of each negative electrode active layer to a predetermined range.

**Examples 10 to 19 and Comparative Examples 7 to 9: Manufacturing of Negative Electrode III**

Artificial graphite and natural graphite (sphericity: 0.45) having average particle diameters ($D_{50}$) of 15 $\mu$m to 16 $\mu$m, respectively, were prepared as carbon-based negative electrode active materials, and styrene-butadiene rubber (SBR) was prepared as a binder. Separately, (1) single-walled carbon nanotubes (S.W.CNT, average size: $450\pm10$ nm), (2) multi-walled carbon nanotubes (M.W.CNT, average size: $550\pm10$ nm), (3) carbon nanofilaments (average size: 750 $\pm10$ nm), (4) graphene (average size: $200\pm10$ nm), and (5) carboxymethyl cellulose (CMC) solution were prepared as carbon structures.

Then, the first negative electrode slurry was prepared by mixing 96 wt.% of the first carbon-based negative electrode active material, 1.5 wt.% of carbon structure, and 2.5 wt.% of styrene butadiene rubber (SBR) with water to obtain 50% solid content.

In addition, the second negative electrode slurry was prepared by mixing 97.5 wt.% of the second carbon-based negative electrode active material and 2.5 wt.% of styrene butadiene rubber (SBR) with water to obtain 50% solid content.

At this time, (1) type and (2) sphericity of the first carbon-based negative electrode active material were controlled as shown in Table 6, and artificial graphite with sphericity of 0.45 was used as the second carbon-based negative electrode active material.

When each negative electrode slurry was prepared, the first negative electrode slurry and the second negative electrode slurry were simultaneously cast on a copper thin plate (thickness: 10 $\mu$m) being transferred roll-to-roll (transfer speed: 5 m/min) using a die coater.

Permanent magnets having a length ratio of 110% to 120% based on the width direction length of the negative electrode slurry were placed on the upper portion of the coated negative electrode slurry and the lower portion of the negative electrode current collector, and a magnetic field was applied for 4 seconds to 6 seconds with a magnetic field intensity of $6,000\pm20$ G. The negative electrode slurry to which the magnetic field was applied was hot-air dried to form a negative electrode in which the first negative electrode active layer and the second negative electrode active layer were sequentially stacked on the negative electrode current collector. The formed negative electrode active layer was rolled at $50\pm1°C$ under a pressure of 100 MPa to 150 MPa and a transfer speed of 3 m/s to manufacture a negative electrode (average thickness of the first negative electrode active layer and the second negative electrode active layer: 60±5 μm and 130±5 μm, respectively).

The average orientation index (O.I.) of the carbon-based active material contained in the first negative electrode active layer and the second negative electrode active layer was calculated for each manufactured negative electrode. The results are shown in Table 8.

[Table 6]

|  | Magnetic field application | First carbon-based negative electrode active material | | Carbon structure | |
|---|---|---|---|---|---|
|  |  | Type | Sphericity | Type | Content |
| Example 10 | O | Artificial graphite | 0.45 | 1 | 0.02 wt.% |
| Example 11 | O | Artificial graphite | 0.45 | 2 | 1.5 wt.% |
| Example 12 | O | Artificial graphite | 0.45 | 3 | 1.5 wt.% |
| Example 13 | O | Artificial graphite | 0.45 | 4 | 1.5 wt.% |
| Example 14 | O | Artificial graphite | 0.45 | 2 | 5 wt.% |
| Example 15 | O | Artificial graphite | 0.45 | 2 | 8 wt.% |
| Example 16 | O | Artificial graphite | 0.45 | 2 | 15 wt.% |
| Example 17 | O | Artificial graphite | 0.95 | 2 | 1.5 wt.% |
| Example 18 | O | Natural graphite | 0.45 | 2 | 1.5 wt.% |
| Example 19 | O | Natural graphite +artificial graphite (2:8 wt./wt.) | 0.45 | 2 | 1.5 wt.% |
| Comparativ e Example 7 | X | Artificial graphite | 0.45 | 2 | 1.5 wt.% |
| Comparativ e Example 8 | O | Artificial graphite | 0.45 | - | - |
| Comparativ e Example 9 | O | Artificial graphite | 0.45 | 5 | 1.5 wt.% |

[Table 7]

|  | Slurry Viscosity (unit: mPa·s) | |
|---|---|---|
|  | First negative electrode slurry | Second negative electrode slurry |
| Example 10 | 15,800 | 3,500 |
| Example 11 | 15,900 | 3,500 |
| Example 12 | 14,700 | 3,500 |
| Example 13 | 16,300 | 3,500 |
| Example 14 | 16,600 | 3,500 |
| Example 15 | 17,300 | 3,500 |
| Example 16 | 19,800 | 3,500 |
| Example 17 | 15,900 | 3,500 |
| Example 18 | 14,700 | 3,500 |
| Example 19 | 15,200 | 3,500 |
| Comparative Example 7 | 15,900 | 3,500 |
| Comparative Example 8 | 4,300 | 3,500 |
| Comparative Example 9 | 8,000 | 3,500 |

[Table 8]

| | Orientation index of first negative electrode active layer $(O.I_{1st})$ | Orientation index of second negative electrode active layer $(O.I_{2nd})$ | $O.I_{1st}/O.I_{2nd}*100$ |
|---|---|---|---|
| Example 10 | 11.1 | 2.6 | 427% |
| Example 11 | 11.7 | 2.4 | 488% |
| Example 12 | 10.8 | 2.5 | 432% |
| Example 13 | 10.1 | 2.5 | 404% |
| Example 14 | 11.9 | 2.7 | 441% |
| Example 15 | 12.5 | 2.5 | 500% |
| Example 16 | 19 | 2.4 | 792% |
| Example 17 | 11.7 | 2.4 | 488% |
| Example 18 | 14.2 | 2.4 | 592% |
| Example 19 | 12.8 | 2.4 | 533% |
| Comparative Example 7 | 11.7 | 16 | 73% |
| Comparative Example 8 | 3.7 | 2.5 | 148% |
| Comparative Example 9 | 9.3 | 2.4 | 388% |

**Experimental Example 2.**

To evaluate the performance of the negative electrode according to the present disclosure, adhesion between the negative electrode current collector and negative electrode active layer, and charging time at 1C-rate were measured for each negative electrode manufactured in Examples 10 to 19 and Comparative Examples 7 to 9. The results are shown in Table 9 below.

[Table 9]

| Type of negative electrode | Adhesion | Charging time (SOC 90%) |
|---|---|---|
| Negative electrode manufactured in Example 10 | 43 gf/cm | 27 min |
| Negative electrode manufactured in Example 11 | 41 gf/cm | 26 min |
| Negative electrode manufactured in Example 12 | 39 gf/cm | 25 min |
| Negative electrode manufactured in Example 13 | 45 gf/cm | 29 min |
| Negative electrode manufactured in Example 14 | 42 gf/cm | 27 min |
| Negative electrode manufactured in Example 15 | 42 gf/cm | 28 min |
| Negative electrode manufactured in Example 16 | 39 gf/cm | 35 min |
| Negative electrode manufactured in Example 17 | 44 gf/cm | 33 min |
| Negative electrode manufactured in Example 18 | 41 gf/cm | 37 min |
| Negative electrode manufactured in Example 19 | 40 gf/cm | 34 min |
| Negative electrode manufactured in Comparative Example 7 | 21 gf/cm | 44 min |
| Negative electrode manufactured in Comparative Example 8 | 17 gf/cm | 27 min |
| Negative electrode manufactured in Comparative Example 9 | 25 gf/cm | 38 min |

As shown in Table 9 above, the negative electrodes of Examples 10 to 19 showed high adhesion of 39 gf/cm or more between the first negative electrode active layer and the negative electrode current collector. Also, secondary batteries including these negative electrodes reached 90% state of charge (SOC) within a short time of 29 minutes or less under standard constant current-constant voltage (CC-CV) charging conditions at 1C-rate.

In contrast, the negative electrodes of Comparative Examples 7 to 9 showed low adhesion of 35 gf/cm or less between the first negative electrode active layer and the negative electrode current collector, and secondary batteries including these were found to take more than 30 minutes to reach 90% state of charge (SOC) under standard constant current-constant voltage (CC-CV) charging conditions at 1C-rate.

This means that the adhesion between the negative electrode current collector and negative electrode active layer and charging rate under standard C-rate conditions can be improved by including carbon structures satisfying a predetermined average particle size in the first negative electrode active layer and controlling the orientation index (O.I) of each negative electrode active layer to a predetermined range.

**Examples 20 to 24 and Comparative Examples 10 to 14. Manufacturing of Negative Electrode IV**

Artificial graphite and natural graphite (sphericity: 0.45) with average particle diameter ($D_{50}$) of 15 $\mu$m to 16 $\mu$m were prepared as carbon-based negative electrode active materials. Additionally, styrene butadiene rubber (SBR) was prepared as a binder, and carboxymethyl cellulose (CMC) was prepared as a first thickening agent and a second thickening agent.

Then, the first negative electrode slurry was prepared by mixing 96 wt.% of the first carbon-based negative electrode active material, 1.5 parts by weight of carboxymethyl cellulose (CMC), and 2.5 wt.% of styrene butadiene rubber (SBR) with water to obtain 50% solid content.

In addition, the second negative electrode slurry was prepared by mixing 96 wt.% of the second carbon-based negative electrode active material, 1.5 parts by weight of carboxymethyl cellulose (CMC), and 2.5 wt.% of styrene butadiene rubber (SBR) with water to obtain 50% solid content.

The 1 type and 2 sphericity of the first carbon-based negative electrode active material were adjusted as shown in Table 10, while artificial graphite with a sphericity of 0.45 (average particle diameter ($D_{50}$): approximately 15 $\mu$m to 16 $\mu$m) was used as the second carbon-based negative electrode active material.

In addition, the first thickening agent and the second thickening agent were added to each negative electrode slurry in a dispersed state in water. The concentration of each solution and the room temperature viscosity of each negative electrode slurry containing them are shown in Table 11.

Once each negative electrode slurry was prepared, the first and second negative electrode slurries were simultaneously cast onto a copper thin plate (thickness: 10 $\mu$m) being roll-to-roll transferred (transfer speed: 5 m/min) using a die coater.

Permanent magnets with a length ratio of 110% to 120% based on the length in the width direction of the negative electrode slurry were disposed in the upper portion of the coated negative electrode slurry and in the lower portion of the negative electrode current collector, and a magnetic field was applied for 9 to 11 seconds with a magnetic field intensity of 6,000$\pm$20 G. The negative electrode slurry with the magnetic field applied was hot air dried to form a negative electrode in the form of the first and second negative electrode active layers were sequentially stacked on the negative electrode current collector. The formed negative electrode active layers were rolled at 50$\pm$1°C under a pressure of 100MPa to 150MPa and a transfer speed of 3 m/s to manufacture the negative electrode (average thickness of first and second negative electrode active layers: 60$\pm$5 $\mu$m and 130$\pm$5 $\mu$m, respectively).

For each manufactured negative electrode, the average orientation index (O.I.) of the carbon-based active materials contained in the first and second negative electrode active layers was calculated. The results are shown in Table 12.

[Table 10]

| | Magnetic field application | First carbon-based negative electrode active material | |
| --- | --- | --- | --- |
| | | Type | Sphericity |
| Example 20 | O | Artificial graphite | 0.45 |
| Example 21 | O | Artificial graphite | 0.45 |
| Example 22 | O | Artificial graphite | 0.95 |
| Example 23 | O | Natural graphite | 0.45 |
| Example 24 | O | Natural graphite + artificial graphite (2:8 wt./wt.) | 0.45 |
| Comparative Example 10 | O | Artificial graphite | 0.45 |
| Comparative Example 11 | O | Artificial graphite | 0.45 |
| Comparative Example 12 | O | Artificial graphite | 0.45 |

(continued)

| | Magnetic field application | First carbon-based negative electrode active material | |
|---|---|---|---|
| | | Type | Sphericity |
| Comparative Example 13 | O | Artificial graphite | 0.45 |
| Comparative Example 14 | X | Artificial graphite | 0.45 |

[Table 11]

| | Thickening agent solution concentration | | Slurry viscosity (unit: mPa·s) | |
|---|---|---|---|---|
| | First thickening agent | Second thickening agent | First negative electrode slurry | Second negative electrode slurry |
| Example 20 | 1.5 wt.% | 1.0 wt.% | 7,500 | 3,600 |
| Example 21 | 2.5 wt.% | 1.0 wt.% | 16,900 | 4,100 |
| Example 22 | 2.5 wt.% | 1.0 wt.% | 16,700 | 4,000 |
| Example 23 | 2.5 wt.% | 1.0 wt.% | 17,400 | 4,000 |
| Example 24 | 2.5 wt.% | 1.0 wt.% | 17,200 | 3,900 |
| Comparative Example 10 | 0.2 wt.% | 0.2 wt.% | 1,500 | 900 |
| Comparative Example 11 | 6.0 wt.% | 6.0 wt.% | 29,000 | 21,000 |
| Comparative Example 12 | 1.0 wt.% | 1.0 wt.% | 3,500 | 3,100 |
| Comparative Example 13 | 4.0 wt.% | 1.0 wt.% | 22,000 | 4,300 |
| Comparative Example 14 | 1.5 wt.% | 1.0 wt.% | 7,500 | 4,100 |

[Table 12]

| | Orientation index of first negative electrode active layer ($O.I_{1st}$) | Orientation index of second negative electrode active layer ($O.I_{2nd}$) | $O.I_{1st}/O.I_{2nd}*100$ |
|---|---|---|---|
| Example 20 | 11.8 | 2.4 | 492% |
| Example 21 | 11.5 | 2.6 | 442% |
| Example 22 | 11.4 | 2.7 | 422% |
| Example 23 | 13.7 | 2.5 | 548% |
| Example 24 | 12.2 | 2.3 | 530% |
| Comparative Example 10 | 1.9 | 3.1 | 95% |
| Comparative Example 11 | 13 | 12.5 | 104% |
| Comparative Example 12 | 2.1 | 2.3 | 91% |
| Comparative Example 13 | 7.9 | 2.4 | 329% |
| Comparative Example 14 | 12.3 | 12.3 | 100% |

**Experimental Example** 3.

To evaluate the performance of the negative electrode according to the present disclosure, for each negative electrode manufactured in Examples 20 to 24 and Comparative Examples 10 to 14, the adhesion between the negative electrode current collector and negative electrode active layer and the charging time at 1C-rate were measured. The results are shown in Table 13 below.

[Table 13]

| Type of negative electrode | Adhesion | Charging time (SOC 90%) |
|---|---|---|
| Negative electrode manufactured in Example 20 | 38 gf/cm | 27 min |
| Negative electrode manufactured in Example 21 | 40 gf/cm | 28 min |
| Negative electrode manufactured in Example 22 | 42 gf/cm | 33 min |
| Negative electrode manufactured in Example 23 | 43 gf/cm | 37 min |
| Negative electrode manufactured in Example 24 | 41 gf/cm | 35 min |
| Negative electrode manufactured in Comparative Example 10 | 11 gf/cm | 25 min |
| Negative electrode manufactured in Comparative Example 11 | 21 gf/cm | 49 min |
| Negative electrode manufactured in Comparative Example 12 | 14 gf/cm | 30 min |
| Negative electrode manufactured in Comparative Example 13 | 29 gf/cm | 31 min |
| Negative electrode manufactured in Comparative Example 14 | 13 gf/cm | 46 min |

As shown in Table 13, the negative electrodes of the Examples showed high adhesion between the first negative electrode active layer and negative electrode current collector of 38 gf/cm or more. In addition, secondary batteries including such negative electrodes reached a state of charge (SOC) of 90% within a short time of 37 minutes or less under standard constant current-constant voltage (CC-CV) charging conditions at 1C-rate.

On the other hand, the negative electrodes of the Comparative Examples showed low adhesion between the first negative electrode active layer and negative electrode current collector of 29 gf/cm or less. In particular, it was confirmed that the secondary batteries of Comparative Examples 11 and 14, which the concentration of the thickening agent solution was significantly high or no magnetic field was applied during negative electrode manufacturing, took more than 45 minutes to reach a state of charge (SOC) of 90% under standard constant current-constant voltage (CC-CV) charging conditions at 1C-rate.

This means that the first negative electrode active layer applied with the first thickening agent solution having a high concentration has a larger orientation index (O.I.) than the second negative electrode active layer applied with the second thickening agent solution having a relatively low concentration, thereby improving the adhesion between the negative electrode current collector and negative electrode active layer and the charging rate under standard C-rate conditions.

## Examples 25 to 28. Manufacturing of Negative Electrode V

Artificial graphite was prepared as a carbon-based negative electrode active material, and multi-walled carbon nanotubes (M.W.CNT, average size: 550±10 nm) as a carbon structure and carboxymethyl cellulose (CMC) as a thickening agent were prepared. Along with these, styrene butadiene rubber (SBR) was prepared as a binder.

Then, the first negative electrode slurry was prepared by mixing 96 parts by weight of the first carbon-based negative electrode active material, 1.5 parts by weight of carbon structure and/or the first thickening agent, and 2.5 parts by weight of styrene butadiene rubber (SBR) with water to obtain 50% solid content.

Additionally, the second negative electrode slurry was prepared by mixing 96 parts by weight of the second carbon-based negative electrode active material, 1.5 parts by weight of carboxymethyl cellulose (CMC) as the second thickening agent, and 2.5 parts by weight of styrene butadiene rubber (SBR) with water to obtain 50% solid content.

At this time, the average particle diameter ($D_{50}$) and sphericity of each carbon-based negative electrode active material and the content of the carbon structure were adjusted as shown in Table 14. In addition, the content of the first thickening agent; the concentration of solutions containing the first and second thickening agents; and the room temperature viscosity of the first and second negative electrode slurries were adjusted as shown in Table 15.

Once each negative electrode slurry was prepared, the first and second negative electrode slurries were simultaneously cast onto a copper thin plate (thickness: 10μm) being transferred roll-to-roll (transfer speed: 5 m/s) using a die coater.

Permanent magnets with a length ratio of 110% to 120% based on the length in the width direction of the negative electrode slurry were disposed in the upper portion of the coated negative electrode slurry and in the lower portion of the negative electrode current collector, and a magnetic field was applied for 4 to 6 seconds with a magnetic field intensity of 6,000±20 G. The negative electrode slurry with the magnetic field applied was hot air dried to form a negative electrode in the form of the first and second negative electrode active layers were sequentially stacked on the negative electrode current collector. The formed negative electrode active layers were rolled at 50±1°C under a pressure of 100MPa to 150MPa and a transfer speed of 3 m/s to manufacture the negative electrode (average thickness of first and second negative electrode active layers: $60\pm5\mu m$ and $160\pm5\mu m$, respectively).

[Table 14]

| | Magnetic field application | First carbon-based negative electrode active material | | Second carbon-based negative electrode active material | | $D_2/D_1$ |
|---|---|---|---|---|---|---|
| | | Average particle diameter ($D_1$) | Sphericity | Average particle diameter ($D_2$) | Sphericity | |
| Exampl e 2 | O | Approx. 3.0μm | 0.95 | Approx. 15μm | 0.45 | 5 |
| Exampl e 11 | O | Approx. 15μm | 0.45 | Approx.15μm | 0.45 | 1 |
| Exampl e 21 | O | Approx. 15μm | 0.45 | Approx. 15μm | 0.45 | 1 |
| Exampl e 25 | O | Approx. 3.0μm | 0.95 | Approx. 15μm | 0.45 | 5 |
| Exampl e 26 | O | Approx. 15μm | 0.45 | Approx. 15μm | 0.45 | 1 |
| Exampl e 27 | O | Approx. 15μm | 0.45 | Approx. 15μm | 0.45 | 1 |
| Exampl e 28 | O | Approx. 3.0μm | 0.95 | Approx. 15μm | 0.45 | 5 |

[Table 15]

| | Carbon structure (MWCNT) content | First thickening agent (CMC) content | Thickening agent solution concentration | | Slurry viscosity (unit: mPa·s) | |
|---|---|---|---|---|---|---|
| | | | First thickening agent | Second thickening agent | First negative electrode slurry | Second negative electrode slurry |
| Example 2 | - | - | - | - | 7,100 | 4,200 |
| Example 11 | 1.5 wt.% | - | - | - | 15,900 | 3,500 |
| Example 21 | - | 1.5 wt.% | 2.5 wt.% | 1.0 wt.% | 16,900 | 4,100 |
| Example 25 | 1.5 wt.% | - | - | - | 15,100 | 4,200 |
| Example 26 | - | 1.5 wt.% | 2.5 wt.% | 1.0 wt.% | 15,500 | 4,500 |
| Example 27 | 1.0 wt.% | 0.5 wt.% | 2.5 wt.% | 1.0 wt.% | 17,100 | 4,600 |
| Example 28 | 1.0 wt.% | 0.5 wt.% | 2.5 wt.% | 1.0 wt.% | 17,300 | 4,600 |

[Table 16]

| | Orientation index of first negative electrode active layer ($O.I_{1st}$) | Orientation index of second negative electrode active layer ($O.I_{2nd}$) | $O.I_{1st}/O.I_{2nd}*100$ |
|---|---|---|---|
| Example 2 | 12 | 2.5 | 480% |
| Example 11 | 11.7 | 2.4 | 488% |
| Example 21 | 11.5 | 2.6 | 442% |
| Example 25 | 12.3 | 2.7 | 456% |
| Example 26 | 12.4 | 2.8 | 443% |
| Example 27 | 13.6 | 2.8 | 486% |
| Example 28 | 13.1 | 2.9 | 452% |

**Experimental Example** 4.

To evaluate the performance of the negative electrode according to the present disclosure, for each negative electrode manufactured in Examples 2, 11, 21, and 25 to 28, the adhesion between the negative electrode current collector and negative electrode active layer and the charging time at 1C-rate were measured. The results are shown in Table 17 below.

[Table 17]

| Type of negative electrode | Adhesion | Charging time (SOC 90%) |
|---|---|---|
| Negative electrode manufactured in Example 2 | 34 gf/cm | 32 min |
| Negative electrode manufactured in Example 11 | 41 gf/cm | 26 min |
| Negative electrode manufactured in Example 21 | 40 gf/cm | 28 min |
| Negative electrode manufactured in Example 25 | 43 gf/cm | 27 min |
| Negative electrode manufactured in Example 26 | 42 gf/cm | 27 min |
| Negative electrode manufactured in Example 27 | 43 gf/cm | 28 min |
| Negative electrode manufactured in Example 28 | 44 gf/cm | 26 min |

As shown in Table 17, the negative electrodes of the Examples showed high adhesion between the first negative electrode active layer and negative electrode current collector of 38 gf/cm or more. In addition, secondary batteries including such negative electrodes reached a state of charge (SOC) of 90% within a short time of 32 minutes or less under standard constant current-constant voltage (CC-CV) charging conditions at 1C-rate.

From these results, it can be seen that the negative electrode according to the present disclosure has excellent lifespan characteristics due to its high adhesion to the negative electrode current collector, and secondary batteries including the same have excellent output characteristics and can be charged in a short time even at 1C-rate.

While the present disclosure has been described with reference to exemplary aspects thereof, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**Claims**

1. A negative electrode, comprising:

a negative electrode current collector;
a first negative electrode active layer disposed on the negative electrode current collector and comprising a first carbon-based negative electrode active material; and
a second negative electrode active layer disposed on the first negative electrode active layer and comprising a second carbon-based negative electrode active material;
wherein the second negative electrode active layer has a second orientation index ($O.I_{2nd}$) of 6 or less, as represented by Formula 1;
wherein the first negative electrode active layer has a first orientation index ($O.I_{1st}$) represented by Formula 1;
wherein a ratio of the first orientation index ($O.I_{1st}$) to the second orientation index ($O.I_{2nd}$) is 200% to 900%,

[Formula 1]

$$O.I = I_{004}/I_{110}$$

wherein $I_{004}$ indicates a peak area value representing a (004) crystal surface of a carbon-based negative electrode active material in an X-ray diffraction spectroscopy (XRD) analysis of one of the first or second negative electrode active layers,
wherein $I_{110}$ indicates a peak area value representing a (110) crystal surface of a carbon-based negative electrode active material in an X-ray diffraction spectroscopy (XRD) analysis of the one of the first or second negative electrode active layers.

2. The negative electrode of claim 1, wherein a ratio ($D_2/D_1$) of an average particle diameter ($D_2$) of the second carbon-based negative electrode active material to an average particle diameter ($D_1$) of the first carbon-based negative electrode active material has a range of 2.0 or more.

3. The negative electrode of claim 1, wherein the first carbon-based negative electrode active material and the second carbon-based negative electrode active material each comprise one or more types of natural graphite or artificial graphite.

4. The negative electrode of claim 1, wherein an average particle diameter ($D_1$) of the first carbon-based negative electrode active material has a range of less than 5 $\mu$m.

5. The negative electrode of claim 1, wherein an average particle diameter ($D_2$) of the second carbon-based negative electrode active material has a range of 10 $\mu$m to 25 $\mu$m.

6. The negative electrode of claim 1, wherein the first negative electrode active layer comprises a carbon structure having an average size in a range of 5 nm to 900 nm.

7. The negative electrode of claim 6, wherein the carbon structure comprises one or more types of a dot-type carbon structure, a fiber-type carbon structure, or a plane-type carbon structure.

8. The negative electrode of claim 6, wherein a content of the carbon structure is in a range of 0.001 wt.% to 10 wt.% based on a total weight of the first negative electrode active layer.

9. The negative electrode of claim 1, wherein the first negative electrode active layer comprises a first thickening agent and the second negative electrode active layer comprises a second thickening agent, and
wherein a content of the first thickening agent has a ratio ranging from 80% to 120% based on a content of the second thickening agent.

10. The negative electrode of claim 9, wherein the first thickening agent and the second thickening agent each comprises one or more of carboxymethylcellulose (CMC), polyvinyl alcohol (PVA), polyvinyl butyral (PVB), polyN-vinylacetamide (PNVA), styrene-butadiene rubber (SBR), acrylic-based resin, or fluorine-based resin.

11. The negative electrode of claim 9, wherein the first thickening agent is included in an amount of 0.5 wt.% to 3 wt.% based on a total weight of the first negative electrode active layer.

12. A manufacturing method of a negative electrode, comprising:

coating at least one side of a negative electrode current collector with a first negative electrode slurry comprising a first carbon-based negative electrode active material;
coating a second negative electrode slurry comprising a second carbon-based negative electrode active material on the coated first negative electrode slurry;
applying a magnetic field to the negative electrode current collector to which the second negative electrode slurry is applied; and
drying the first negative electrode slurry and the second negative electrode slurry to which the magnetic field has been applied to form a first negative electrode active layer and a second negative electrode active layer, respectively;
wherein the second negative electrode active layer has a second orientation index ($O.I_{2nd}$) of 6 or less, as represented by Formula 1;
wherein the first negative electrode active layer has a first orientation index ($O.I_{1st}$) represented by Formula 1, wherein a ratio of the first orientation index ($O.I_{1st}$) to the second orientation index ($O.I_{2nd}$) is 200% to 900%,

$$[\text{Formula 1}] \ O.I = I_{004}/I_{110}$$

wherein $I_{004}$ indicates a peak area value representing a (004) crystal surface of a carbon-based negative electrode active material in an X-ray diffraction spectroscopy (XRD) analysis of one of the first or second negative electrode active layers,
wherein $I_{110}$ indicates a peak area value representing a (110) crystal surface of a carbon-based negative electrode active material in an X-ray diffraction spectroscopy (XRD) analysis of the one of the first or second negative electrode active layers.

13. The manufacturing method of the negative electrode of claim 12, wherein the step of coating the first negative electrode slurry and the step of coating the second negative electrode slurry are performed simultaneously.

14. The manufacturing method of the negative electrode of claim 12, wherein the magnetic field is applied with an intensity ranging from 3,000 G to 10,000 G.

15. The manufacturing method of the negative electrode of claim 12, wherein the magnetic field is applied for a period ranging from 1 second to 60 seconds.

16. The manufacturing method of the negative electrode of claim 12, wherein the first negative electrode slurry has a solid content in a range of 35% to 85%.

17. The manufacturing method of the negative electrode of claim 12, wherein a room temperature viscosity of the first negative electrode slurry is higher than a room temperature viscosity of the second negative electrode slurry.

18. The manufacturing method of the negative electrode of claim 12, wherein a ratio ($D_2/D_1$) of an average particle diameter ($D_2$) of the second carbon-based negative electrode active material to an average particle diameter ($D_1$) of the first carbon-based negative electrode active material has a range of 2.0 or more.

19. The manufacturing method of the negative electrode of claim 12, wherein the first negative electrode slurry comprises a carbon structure having an average size in a range of 5 nm to 900 nm.

20. The manufacturing method of the negative electrode of claim 19, wherein a content of the carbon structure has a range of 0.001 wt.% to 10 wt.% based on a total weight of a solid content of the first negative electrode slurry.

21. The manufacturing method of the negative electrode of claim 12, wherein the first negative electrode slurry is mixed with a first thickening agent to form a first solution and the second negative electrode slurry is mixed with a second thickening agent to form a second solution, and
wherein a concentration of the first solution is different than a concentration of the second solution.

22. The manufacturing method of the negative electrode of claim 21, wherein the concentration of the second solution is in a range of 0.5 wt.% to 1.5 wt.% based on a total weight of the second solution, and
wherein the concentration of the first solution has a concentration ratio of 150% to 250% based on the concentration of the second solution.

## INTERNATIONAL SEARCH REPORT

| International application No. |
| --- |
| **PCT/KR2024/016114** |

| A. | CLASSIFICATION OF SUBJECT MATTER |
| --- | --- |

**H01M 4/133**(2010.01)i; **H01M 4/1393**(2010.01)i; **H01M 4/583**(2010.01)i; **H01M 4/62**(2006.01)i; **H01M 10/052**(2010.01)i; **H01M 4/587**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/133(2010.01); H01M 10/052(2010.01); H01M 10/0525(2010.01); H01M 4/1393(2010.01); H01M 4/583(2010.01); H01M 50/249(2021.01); H01M 50/258(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(negative electrode), 탄소계 음극 활물질(carbon based anode active material), 정렬도(alignment), 증점제(thickening agent)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2544496 B1 (LG ENERGY SOLUTION, LTD.) 20 June 2023 (2023-06-20) See paragraphs [0074], [0107]-[0108], [0110], [0170]-[0171] and [0188]; and claims 1, 3 and 9. | 1,3-17,19-22 |
| Y | | 2,18 |
| Y | KR 10-2014-0095980 A (LG CHEM, LTD.) 04 August 2014 (2014-08-04) See claims 1-2 and 4. | 2,18 |
| A | CN 113036298 B (NINGDE CONTEMPORARY AMPEREX TECHNOLOGY CO., LTD.) 11 February 2022 (2022-02-11) See entire document. | 1-22 |
| A | KR 10-2020-0124513 A (SAMSUNG SDI CO., LTD.) 03 November 2020 (2020-11-03) See entire document. | 1-22 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 January 2025** | **20 January 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/016114**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2536147 B1 (LG ENERGY SOLUTION, LTD.) 26 May 2023 (2023-05-26)<br>See entire document. | 1-22 |

Form PCT/ISA/210 (second sheet) (July 2022)

## INTERNATIONAL SEARCH REPORT
### Information on patent family members

International application No.

**PCT/KR2024/016114**

| Patent document cited in search report | | | Publication date (day/month/year) | Patent family member(s) | | | Publication date (day/month/year) |
|---|---|---|---|---|---|---|---|
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| KR | 10-2014-0095980 | A | 04 August 2014 | CN | 104126242 | A | 29 October 2014 |
| | | | | CN | 106935793 | A | 07 July 2017 |
| | | | | CN | 106935793 | B | 14 February 2020 |
| | | | | EP | 2797142 | A1 | 29 October 2014 |
| | | | | EP | 2797142 | A4 | 25 May 2016 |
| | | | | EP | 2797142 | B1 | 12 September 2018 |
| | | | | JP | 2015-511389 | A | 16 April 2015 |
| | | | | JP | 6120382 | B2 | 26 April 2017 |
| | | | | KR | 10-1560471 | B1 | 15 October 2015 |
| | | | | US | 10263242 | B2 | 16 April 2019 |
| | | | | US | 2014-0287316 | A1 | 25 September 2014 |
| | | | | US | 2017-0125788 | A1 | 04 May 2017 |
| | | | | US | 9583756 | B2 | 28 February 2017 |
| | | | | WO | 2014-116029 | A1 | 31 July 2014 |
| CN | 113036298 | B | 11 February 2022 | CN | 113036298 | A | 25 June 2021 |
| KR | 10-2020-0124513 | A | 03 November 2020 | CN | 113728461 | A | 30 November 2021 |
| | | | | CN | 113728461 | B | 30 July 2024 |
| | | | | EP | 3961758 | A1 | 02 March 2022 |
| | | | | EP | 3961758 | A4 | 11 January 2023 |
| | | | | EP | 3961758 | B1 | 21 August 2024 |
| | | | | JP | 2022-530082 | A | 27 June 2022 |
| | | | | JP | 7246521 | B2 | 27 March 2023 |
| | | | | KR | 10-2570570 | B1 | 23 August 2023 |
| | | | | US | 2022-0209217 | A1 | 30 June 2022 |
| | | | | US | 2024-0363861 | A1 | 31 October 2024 |
| | | | | WO | 2020-218773 | A1 | 29 October 2020 |
| KR | 10-2536147 | B1 | 26 May 2023 | CN | 118749141 | A | 08 October 2024 |
| | | | | EP | 4465380 | A1 | 20 November 2024 |
| | | | | WO | 2024-111906 | A1 | 30 May 2024 |

Form PCT/ISA/210 (patent family annex) (July 2022)

**REFERENCES CITED IN THE DESCRIPTION**

**Patent documents cited in the description**

- KR 1020230142600
- KR 1020230142612
- KR 1020230142616
- KR 1020240144799
- KR 1020220064389